# EUROPEAN PATENT APPLICATION

(11) **EP 4 826 501 A1**
(43) Date of publication of application: **21.10.2026**
(21) Application number: 24918999.4
(22) Date of filing: 26.12.2024
(51) Int. Cl.: G06F 3/0484, G06F 3/0481, G06F 9/451, G06N 3/0475

(54) **ELECTRONIC DEVICE AND METHOD FOR PROVIDING USER INTERFACE THEREFOR**

(30) Priority: 16.01.2024 KR 20240007034; 04.03.2024 KR 20240030720
(71) Applicant: Samsung Electronics Co., Ltd., Suwon-si, Gyeonggi-do 16677 (KR)
(72) Inventor: SUH, Donghee, Suwon-si Gyeonggi-do 16677 (KR); KANG, Doosuk, Suwon-si Gyeonggi-do 16677 (KR); KIM, Hyeongseok, Suwon-si Gyeonggi-do 16677 (KR); PARK, Sungkweon, Suwon-si Gyeonggi-do 16677 (KR); JEON, Kyeongjin, Suwon-si Gyeonggi-do 16677 (KR)
(74) Representative: Gulde & Partner
(86) International application number: PCT/KR2024/021104
(87) International publication number: WO 2025/154975

(57) **Abstract**

An electronic device according to an embodiment of the present disclosure may be configured to: identify at least one of user personal information stored in a memory of the electronic device and a user input inputted to the electronic device; generate at least one prompt on the basis of at least one of the user personal information and the user input; generate a first user interface for guiding a recommended operation by inputting the at least one prompt to an artificial intelligence model; and provide the generated first user interface through a display of the electronic device.

## Description

### TECHNICAL FIELD

The present disclosure relates to an electronic device and a method for providing a user interface therefor.

### BACKGROUND

In recent years, services for recommending content having high relevance to a user's context of utilizing an electronic device have become widespread. The electronic device may provide recommendations for various types of content based on a usage history of the user (e.g., user data). For example, the content may include news, movies, and/or music. In order to increase accuracy of a content recommendation service, a method for selecting content having a high degree of interest of a user is being discussed.

An electronic device may display a user interface (UI) including content in which the user has interest. A UI including content in which a user has interest may include a UI for execution of applications such as a product and/or a game, or a widget for inducing an action of an electronic device. An electronic device may display a notification related to content.

The aforementioned information may be provided as related art for the purpose of assisting understanding of the present disclosure. No claim or determination is made as to whether any of the above matters constitutes prior art regarding to the present disclosure.

### DISCLOSURE

### TECHNICAL SOLUTION

An electronic device according to an embodiment may include a display, at least one processor electrically connected to the display, and a memory electrically connected to the at least one processor and storing instructions. The instructions, when executed by the at least one processor, may cause the electronic device to identify at least one of user personal information stored in the memory or user input to the electronic device, based on at least one of the user personal information or the user input, generate at least one prompt, by inputting the at least one prompt into an artificial intelligence model, generate a first user interface to guide a recommended operation, and display the first user interface through the display.

A method of an electronic device according to an embodiment may include identifying at least one of user personal information stored in a memory of the electronic device or user input to the electronic device, generating at least one prompt based on the at least one of the user personal information and the user input, generating a first user interface to guide a recommended operation by inputting the at least one prompt to an artificial intelligence model, and providing the generated first user interface through a display of the electronic device.

A non-transient computer-readable recording medium storing instructions according to one embodiment may store instructions that, when executed by a processor of an electronic device, cause the processor to perform an operation of identifying at least one of user personal information stored in a memory of the electronic device or user input to the electronic device, an operation of generating at least one prompt based on the at least one of the user personal information or the user input, an operation of generating a first user interface to guide a recommended operation by inputting the at least one prompt to an artificial intelligence model, and an operation of providing the generated first user interface through a display of the electronic device.

### BRIEF DESCRIPTION OF THE DRAWINGS

FIG. 1 is a block diagram illustrating a configuration of an electronic device according to an embodiment.
FIGS. 2A and 2B are flowcharts illustrating an operation of an electronic device according to an embodiment.
FIGS. 3A to 3F illustrate components of modules of an electronic device according to an embodiment.
FIG. 4 illustrates a data format of data transmitted to a prompt manager according to an embodiment.
FIGS. 5A and 5B illustrate user interfaces displayed on a display based on user personal information according to an embodiment.
FIGS. 6A to 6C illustrate user interfaces displayed on a display based on user personal information or user input according to an embodiment.
FIG. 7 is a block diagram of an electronic device in a network environment according to an embodiment.
FIG. 8 illustrates an artificial intelligence system according to an embodiment.
With respect to the description of the drawings, the same or similar reference signs may be used for the same or similar elements.

### DETAILED DESCRIPTION

Hereinafter, various embodiments of the present disclosure will be described with reference to the accompanying drawings. However, this is not intended to limit the present disclosure to the specific embodiments, and it is to be construed to include various modifications, equivalents, and/or alternatives of embodiments of the present disclosure.

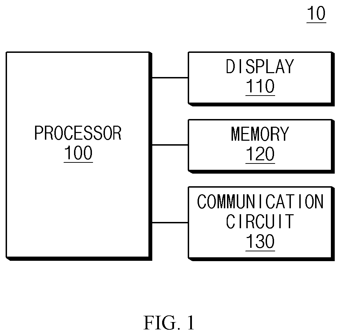

FIG. 1 is a block diagram illustrating a configuration of an electronic device according to an embodiment.

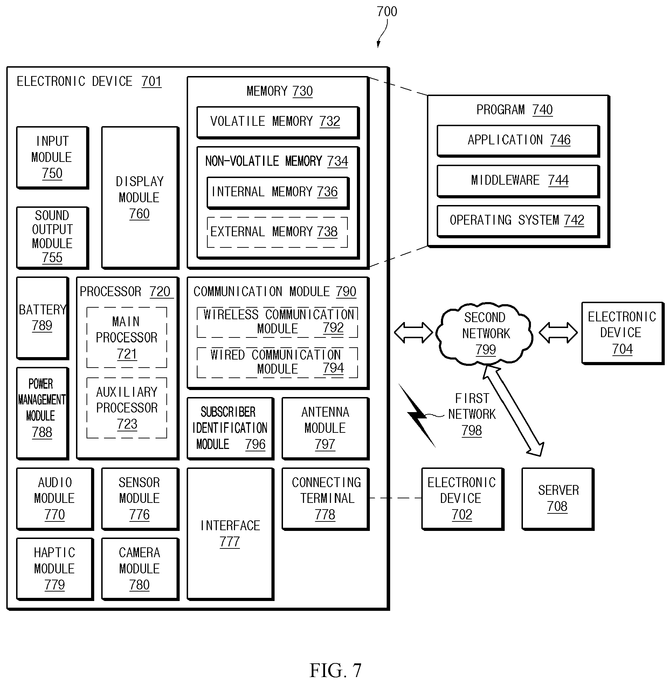

Referring to FIG. 1, an electronic device 10 according to an embodiment may include a processor 100, a display 110, a memory 120, and a communication circuit 130. The electronic device 10 of FIG. 1 may correspond to, for example, an electronic device 701 of FIG. 7. Components of the electronic device 10 described below with reference to FIG. 1 are merely an example, and embodiments of the present disclosure are not limited thereto. For example, the electronic device 10 may not include at least some of components illustrated in FIG. 1 (e.g., the communication circuit 130). For example, the electronic device 10 may further include other components (e.g., components of an electronic device 701 in FIG. 7) in addition to the components illustrated in FIG. 1.

According to an embodiment, the processor 100 may be electrically or operatively connected to the display 110, the memory 120, and the communication circuit 130. The expression "operatively connected" between components may mean that the components are functionally connected or communicatively connected. For example, operatively connected components may transmit and receive data to and from each other. For example, one component may execute a function of another component operatively connected thereto, directly or via still another component, by transmitting a control signal to the other component.

According to an embodiment, the processor 100 may include at least one processor. The processor 100 may include one chip or one chipset. In the present disclosure, the processor 100 may be referred to as a hardware component having an architecture based on at least one processing circuit. For example, the processor 100 may be disposed (or positioned) on a board (e.g., a printed circuit board) located inside the electronic device 10, and may communicate with another component of the electronic device 10 through at least one conductive path formed on the board.

According to an embodiment, the processor 100 may control various components constituting the electronic device 10. In one example, the processor 100 may execute instructions stored in the memory 120. For example, the processor 100 may generate a user interface using a machine learning module and may display a generated new user interface on at least a partial region of the display 110. In one example, the processor 100 may use the communication circuit 130 to transmit and receive data for generating a prompt. For example, the processor 100 may receive data for generating a prompt from an external device (e.g., a server) using the communication circuit 130. The processor 100 of FIG. 1 may correspond to, for example, a processor 720 of FIG. 7.

According to an embodiment, the display 110 may display an image and/or a video. The display 110 may include a plurality of pixels and may include wiring for driving respective pixels. In one example, the display 110 may include a flexible display and/or a rigid display. For example, the flexible display may include a foldable display or a rollable display. The display 110 may be visible through, for example, a front side or a rear side of a foldable electronic device. The display 110 of FIG. 1 may correspond to, for example, a display module 760 of FIG. 7.

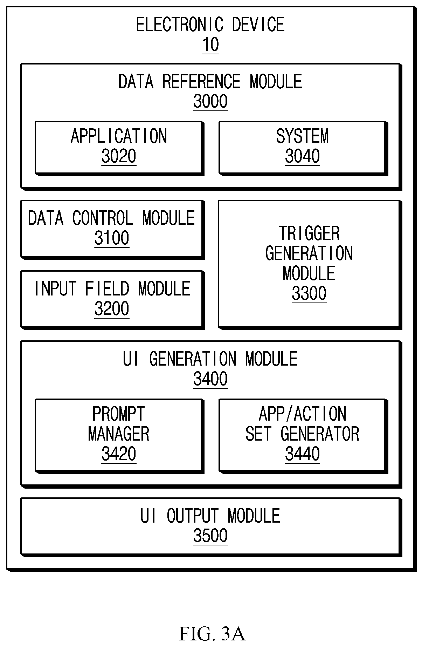

According to an embodiment, the memory 120 may store instructions executed by the processor 100. For example, the memory 120 may at least temporarily store data received from an external electronic device or a network. In one example, the memory 120 may store data associated with a prompt required to provide recommendation information to a user. A detailed description of data allocated in the memory and/or a relationship of allocated data will be described below with reference to FIGS. 3A to 3F. The memory 120 of FIG. 1 may correspond to, for example, a memory 730 of FIG. 7.

According to an embodiment, the communication circuit 130 may include at least one circuit for transmitting and receiving data. The communication circuit 130 may include at least one circuit configured to perform conversion of transmitted and received data. In one example, the communication circuit 130 may include at least one antenna module for communicating with an external device (e.g., a server) for data transmission and reception. The communication circuit 130 of FIG. 1 may correspond to, for example, a communication module 790 of FIG. 7.

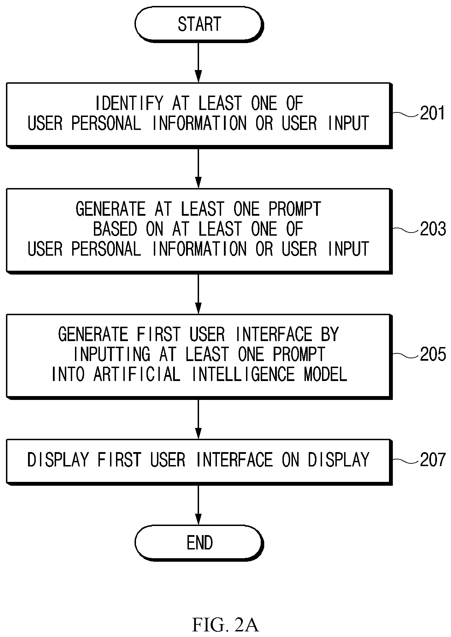

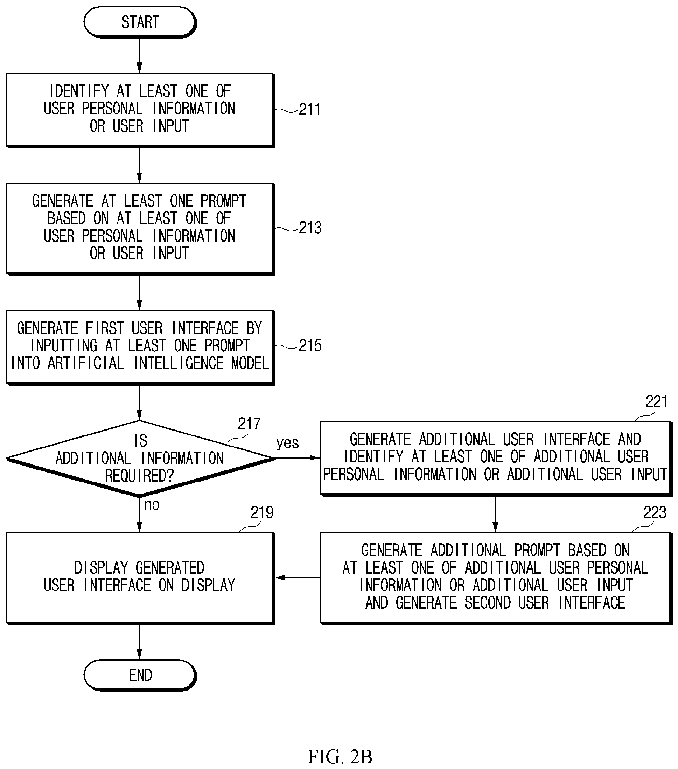

FIGS. 2A and 2B are flowcharts illustrating an operation of an electronic device according to an embodiment.

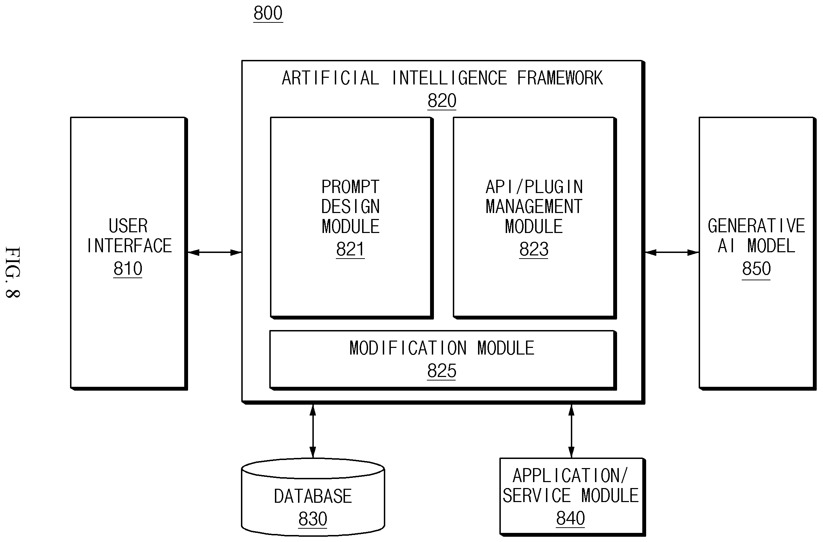

Referring to FIGS. 1 and 2A, the electronic device 10 (e.g., the processor 100 of the electronic device 10) may identify user personal information and/or user input, may generate at least one prompt based on the identified user personal information and/or user input, and may generate a first user interface (UI) by inputting the generated at least one prompt into an artificial intelligence model. The electronic device 10 may display the generated first user interface on at least a partial region of the display 110. The artificial intelligence model may correspond to, for example, a generative artificial intelligence (AI) model 850 of FIG. 8.

According to an embodiment, in operation 201, the processor 100 may identify at least one of user personal information or user input. In one example, the processor 100 may identify the user personal information stored in the memory 120 of the electronic device 10. For example, the processor 100 may identify the user personal information recorded in at least one of a calendar application, a memo application, a gallery application, or a contacts application of the electronic device 10. For example, the user personal information recorded in the calendar application may include data related to at least one of a title, a date, a time, a place, or an attendee of a schedule. In one example, the processor 100 may retrieve the user personal information stored in the memory 120 of the electronic device 10 within a designated time range. For example, the processor 100 may retrieve the user personal information stored in the memory 120 over the past year.

According to an embodiment, the processor 100 may identify the user input to the electronic device 10. In one example, the processor 100 may identify the user input entered into an input interface (e.g., a search window) displayed on at least a partial region of the display 110 of the electronic device 10. For example, the processor 100 may identify text entered by the user into a search window displayed on a screen (e.g., a home screen) of the electronic device 10. In one example, the processor 100 may identify the user input entered based on a user interface displayed on at least a partial region of the display 110 of the electronic device 10. For example, the processor 100 may identify the user input entered into a widget displayed on at least a partial region of the display 110.

According to an embodiment, the processor 100 may collect the user personal information stored in the memory 120 of the electronic device 10 and/or terminal information of the electronic device 10 periodically or based on occurrence of a designated event. For example, the processor 100 may periodically collect user schedule information recorded in the calendar application. For example, the processor 100 may analyze a period in which the user activates a certain application of the electronic device 10 and collect information associated with an application usage pattern of the user. For example, the processor 100 may store information regarding user input previously entered into the electronic device 10 by the user. In one example, the processor 100 may identify the user personal information and/or user input based on periodically collected user personal information and/or terminal information.

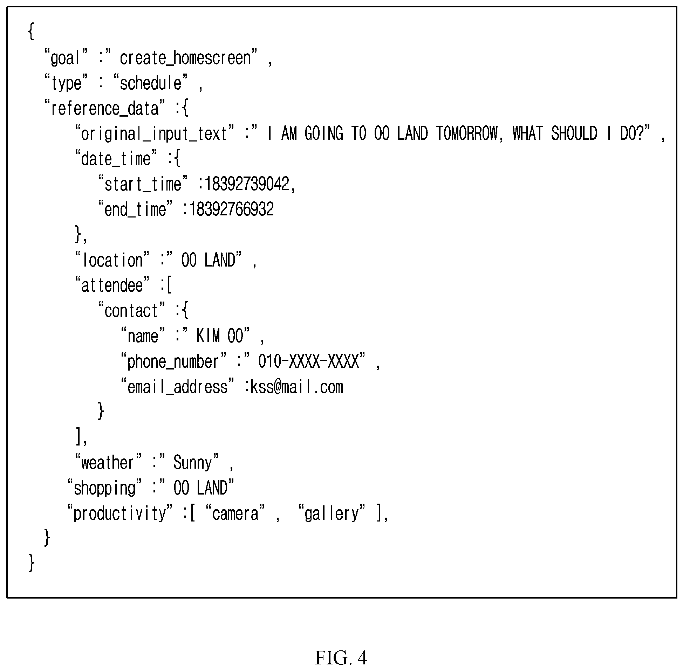

According to an embodiment, in operation 203, the processor 100 may generate at least one prompt based on at least one of the user personal information or the user input. In one example, the processor 100 may identify data suitable for prompt generation from the identified user personal information. For example, the processor 100 may identify, in user personal information stored in the calendar application of the user, data corresponding to text (e.g., a video conference, a 60th birthday party, or an overseas business trip) corresponding to an event (e.g., a meeting, an anniversary, or a business trip) of the user, and data corresponding to a scheduled event date, a time, and/or a place. In one example, the processor 100 may identify data suitable for prompt generation from the identified user input. For example, the processor 100 may identify, in the user input entered into the search window of the home screen, data corresponding to text (e.g., a meeting, a wedding anniversary, a client company, a bank, or a volume) corresponding to an event (e.g., a meeting, an anniversary, a business trip, an application search, or a device setting) of the user, and data corresponding to a scheduled event date, a time, and/or a place. A detailed operation of identifying data suitable for prompt generation from the user personal information and/or the user input will be described below with reference to FIG. 4.

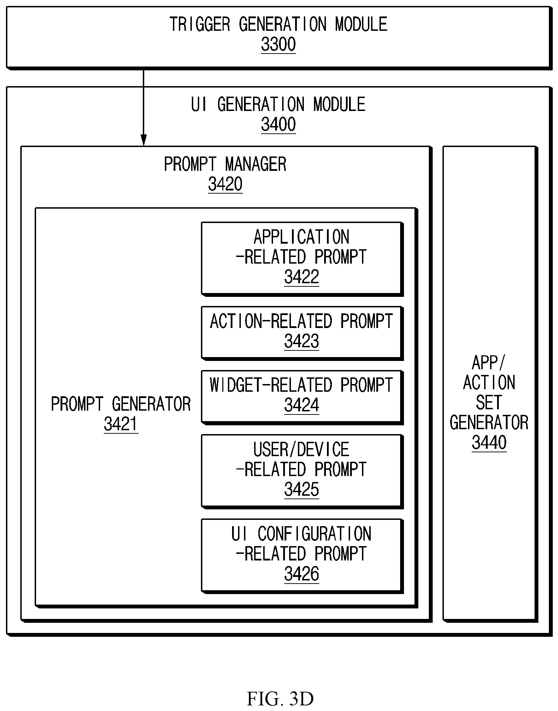

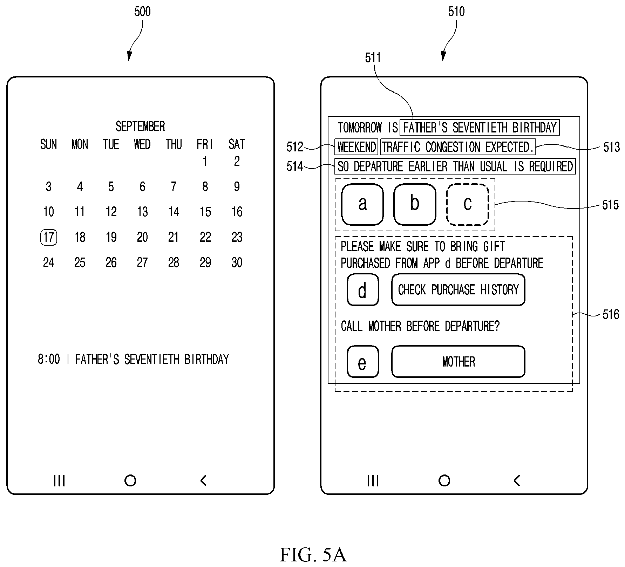

According to an embodiment, the processor 100 may generate at least one prompt using a prompt generation algorithm. In one example, the prompt generation algorithm may correspond to an algorithm stored in the memory 120 or an algorithm stored in an external device. In one example, the prompt generation algorithm may include an algorithm implemented by a generative artificial intelligence model. In one example, the prompt generation algorithm may generate the prompt based on data identified by the processor 100. For example, when the processor 100 identifies data "father," "70th birthday party," and "September 19" from the user personal information and/or the user input, the prompt generation algorithm may generate prompts "collect action information associated with father (e.g., call mother)," "collect application information associated with a 70th birthday party (e.g., a restaurant reservation application)," or "collect widget information associated with September 19 (e.g., a user interface displaying weather on September 19)." A detailed operation of generating a prompt will be described below with reference to FIGS. 3D and 5A.

According to an embodiment, the prompt generation algorithm may select an application, an action, a widget, and/or a terminal state related to the user personal information and/or the user input based on the data identified by the processor 100 from the user personal information and/or the user input, and may generate a prompt requesting a widget configuration based on the selected data. In one example, the prompt generation algorithm may generate a prompt requesting collection of an application, an action, a widget, and/or a terminal state related to the user personal information and/or the user input, and may generate a prompt requesting a widget configuration based on the application, action, widget, and/or terminal state collected based on the generated prompt.

According to an embodiment, in operation 205, the processor 100 may generate a first user interface by inputting at least one prompt into an artificial intelligence model. In one example, the artificial intelligence model may include an artificial neural network based on machine learning. For example, the artificial intelligence model may include a generative neural network (hereinafter, a generative adversarial network (GAN)), a variational autoencoder (VAE), or a Style GAN. In one example, the artificial intelligence model may generate a user interface based on the prompt generated by the processor 100. For example, when the prompt "collect application information associated with a 70th birthday party" is input into the artificial intelligence model, the artificial intelligence model may collect a restaurant reservation application and a flower delivery application. In one example, the artificial intelligence model may generate a user interface based on the collected data. For example, when the prompt "arrange collected application information on a home screen" is input into the artificial intelligence model, the artificial intelligence model may generate a user interface in which applications having highest relevance to the 70th birthday party are arranged on the home screen in order.

According to an embodiment, in operation 207, the processor 100 may display the user interface on at least a partial region of the display 110. In one example, the processor 100 may display the user interface generated by the artificial intelligence model in operation 205 on the display 110. For example, the artificial intelligence model may collect applications associated with a 70th birthday party based on the prompt "collect application information associated with a 70th birthday party," and may generate a user interface configured such that applications associated with a 70th birthday party correspond to the home screen of the electronic device 10 based on the prompt "arrange collected application information on a home screen." For example, the processor 100 may display the user interface generated in a 4×2 widget form on the display 110 such that applications associated with the 70th birthday party correspond to a configuration of the home screen. In one example, the processor 100 may display the user interface generated by the artificial intelligence model stored in the memory 120 on at least a partial region of the display 110. In one example, the processor 100 may receive the user interface generated by the artificial intelligence model stored in an external server device (e.g., a server 708 of FIG. 7). The processor 100 may display the received user interface on at least a partial region of the display 110.

Referring to FIG. 2B, the electronic device 10 (e.g., the processor 100 of the electronic device 10) may identify user personal information and/or user input, may generate at least one prompt based on the identified user personal information and/or the identified user input, and may generate a first user interface by inputting the generated at least one prompt into the artificial intelligence model, and then determine whether additional information is required, thereby displaying the first user interface or a second user interface generated based on the additional information on at least a partial region of the display 110.

According to an embodiment, in operation 211, the processor 100 may identify at least one of user personal information or user input. In one example, the processor 100 may identify the user personal information stored in the memory 120 of the electronic device 10. For example, the processor 100 may identify the user personal information recorded in a calendar application, a memo application, a gallery application, or a contacts application of the electronic device 10. For example, the user personal information recorded in the gallery application may include data related to at least one of a photographing date, a photographing time, a photographing place, or a photographing target (e.g., at least one object captured in a photograph) of a photograph stored in a gallery application.

According to an embodiment, the processor 100 may identify the user input to the electronic device 10. In one example, the processor 100 may identify the user input to the electronic device 10. For example, the processor 100 may identify text entered by the user into the search window displayed on the home screen of the electronic device 10. For example, the processor 100 may identify the user input entered into a widget displayed on at least a partial region of the display 110. In one example, the user input may include a voice input, a gesture, or a movement pattern of the electronic device 10 (e.g., a motion of shaking the electronic device 10 or a motion of flipping the electronic device 10).

According to an embodiment, in operation 213, the processor 100 may generate at least one prompt based on at least one of the user personal information or the user input. In one example, the processor 100 may identify data suitable for prompt generation from the identified user personal information. For example, the processor 100 may identify, in user personal information stored in the memo application of the user, data corresponding to text (e.g., an airport, an admission ticket, or a graduation ceremony) corresponding to an event (e.g., a trip, an examination, or a graduation) of the user, and data corresponding to a scheduled event date, a time, and/or a place. According to an embodiment, the processor 100 may identify data suitable for prompt generation from the identified user input. For example, the processor 100 may identify voice data (e.g., an airport, an admission ticket, or a graduation ceremony) corresponding to an event (e.g., a trip, an examination, or a graduation) of the user among user voice inputs to the electronic device, and voice data corresponding to a scheduled event date, a time, and/or a place.

According to an embodiment, the processor 100 may use the artificial intelligence model to identify data suitable for prompt generation from the user personal information and/or the user input. For example, the processor 100 may identify keywords corresponding to weather, a season, a person, or a place captured in a photograph stored in the gallery application by analyzing the photograph using the artificial intelligence model. In one example, the processor 100 may use the identified keywords as data suitable for prompt generation. For example, the processor 100 may analyze a photograph stored in the gallery application using the artificial intelligence model and may identify a keyword of winter and keywords of an animal from photographs stored in the gallery application. The processor 100 may use the identified winter and animal keywords for prompt generation.

According to an embodiment, the processor 100 may generate at least one prompt using a prompt generation algorithm. In one example, the prompt generation algorithm may correspond to an algorithm stored in the memory 120 or an algorithm stored in an external device. In one example, the prompt generation algorithm may include an algorithm implemented by a generative artificial intelligence model. In one example, the prompt generation algorithm may generate the prompt based on data identified by the processor 100.

According to an embodiment, the prompt may be generated at a point in time when at least one of the user personal information or the user input is identified, or at least one point in time after the identified point in time. For example, when the user input "I am going to OO Land tomorrow, what should I do?" is input into the electronic device 10, the processor 100 may immediately generate the prompt "collect widget information associated with OO Land." For example, when the schedule information is input into the calendar application, the processor 100 may generate the prompt at a point in time corresponding to the input schedule information. For example, when data "May 5 OO Land" is stored in the calendar application, the processor 100 may generate the prompt "collect application information associated with OO Land" at a point in time corresponding to one week after a point in time when the data is stored or at a point in time corresponding to one day before May 5 (e.g., May 4).

According to an embodiment, in operation 215, the processor 100 may generate a first user interface by inputting at least one prompt into the artificial intelligence model. In one example, the artificial intelligence model may include an artificial neural network based on machine learning. In one example, referring also to FIG. 2A, operations 201 to 205 of FIG. 2A may correspond to operations 211 to 215 of FIG. 2B. In one example, operations 201 to 205 of FIG. 2A and operations 211 to 215 of FIG. 2B may include common operations, and detailed descriptions of common operations may be omitted for convenience of description.

According to an embodiment, in operation 217, the processor 100 may determine whether additional information is required to generate a user interface. In one example, when data included in the first user interface is insufficient, the processor 100 may determine that additional information is required. For example, when the number of recommended applications included in a first user interface is equal to or less than a reference number (e.g., 3), the processor 100 may set a reference period of the user personal information stored in the electronic device 10 to a longer period. In one example, the processor 100 may check whether additional information is required from the user using the first user interface. For example, the processor 100 may include an interface for receiving additional input of companion information in the first user interface related to a travel schedule of the user. For example, the processor 100 may include an interface for receiving additional input of gift information of a birthday target person, preference information of the birthday target person, budget information of a birthday schedule, and/or place information in the first user interface related to the birthday schedule. For example, the processor 100 may include, in the first user interface related to shopping, an interface for receiving additional input of store information, alternative product information, and/or price information not included in the first user interface.

According to an embodiment, in operation 219, the processor 100 may display the generated user interface on at least a partial region of the display 110. In one example, the processor 100 may display the user interface generated by the artificial intelligence model stored in the memory 120 on at least a partial region of the display 110. In one example, the processor 100 may receive the user interface generated by the artificial intelligence model stored in an external server device (e.g., a server 708 of FIG. 7). The processor 100 may display the received user interface on at least a partial region of the display 110. In one example, when the second user interface generated by an additional prompt is generated, the processor 100 may display an additional user interface on at least a partial region of the display 110.

According to an embodiment, the processor 100 may change a configuration of the generated user interface based on the environment of the display 110. For example, when the generated user interface is displayed on the home screen of the electronic device 10, the processor 100 may adjust a color and/or a size of the generated user interface based on a background color of the home screen and/or a size of the home screen. For example, the processor 100 may adjust an arrangement layout of application icons included in the generated user interface and/or an arrangement order of an action recommendation user interface.

According to an embodiment, when additional information is required to generate a user interface (e.g., YES in operation 217), in operation 221, the processor 100 may generate an additional user interface and may identify at least one of additional user personal information or additional user input. In one example, after generating the first user interface, the processor 100 may generate the additional user interface to guide the user to provide the additional user personal information and/or the additional user input. For example, with respect to the first user interface related to an anniversary, the additional user interface may include a user interface asking whether a venue for the anniversary has changed. In one example, the processor 100 may identify the additional user personal information and/or the additional user input. In one example, operations performed by the processor 100 in operation 221 may include operations performed in operation 211.

According to an embodiment, in operation 223, the processor 100 may generate the additional prompt based on at least one of the additional user personal information or the additional user input and may generate the second user interface based on the additional prompt. In one example, the processor 100 may generate at least one prompt based on the additional user personal information and/or the additional user input identified in operation 221. In one example, operations performed by the processor 100 in operation 223 may include operations performed in operations 213 to 215.

Orders of operations described above with reference to FIGS. 2A and 2B are examples, and embodiments of the present disclosure are not limited thereto. For example, at least some operations may be performed in an order different from the order of FIG. 2A or FIG. 2B or may be performed substantially simultaneously with another operation of FIG. 2A or FIG. 2B. At least some operations described above with reference to FIGS. 2A and 2B may be omitted.

The user personal information according to an embodiment may include at least one of schedule information of the user stored in the memory 120, date information, time information, place information, photograph information, memo information, or data received from an application installed in the electronic device 10. In one example, the user input may include at least one of schedule information, date information, time information, place information, product information, attendee information, or interface information (e.g., a search window, a home screen widget) of the user into which user input is entered.

The electronic device 10 according to an embodiment may generate the additional user interface for generating the additional prompt. In one example, the electronic device 10 may identify at least one of the additional user personal information stored in the memory 120 or the additional user input based on the additional user interface and may generate at least one additional prompt based on at least one of the identified additional user personal information or the identified additional user input. In one example, the electronic device 10 may generate the second user interface to guide a recommendation operation by inputting the additional prompt into the artificial intelligence model and may provide the generated second user interface through the display 110.

At least one prompt according to an embodiment may cause the artificial intelligence model to collect at least one of an application, an action, a widget, or resolution information associated with at least one of the user personal information or the user input. In one example, at least one prompt may cause the artificial intelligence model to generate the first user interface based on at least one of the collected application, action, widget, or resolution information.

FIGS. 3A to 3F illustrate components of modules of an electronic device according to an embodiment.

Referring to FIG. 3A, the electronic device 10 may include a data reference module 3000, a data control module 3100, an input field module 3200, a trigger generation module 3300, a UI generation module 3400, and/or a UI output module 3500. In one example, the electronic device 10 may be configured to implement a software structure. For example, the software structure may be implemented by instructions stored in the memory 120 being executed by the processor 100. Components in a software structure may be referred to as software modules (e.g., an application, a program, or a thread). For example, a software structure may include a data reference module 3000, a data control module 3100, an input field module 3200, a trigger generation module 3300, a UI generation module 3400, and/or a UI output module 3500.

According to an embodiment, the data reference module 3000 may store data corresponding to an application 3020 and/or a system 3040. In one example, the data reference module 3000 may provide, to the data control module 3100, data that may be used for prompt generation. In one example, the data reference module 3000 may store data stored in the application 3020 and/or data related to settings of the system 3040 of the electronic device 10. For example, the data reference module 3000 may store user contacts data stored in a messenger application and periodic airplane mode setting record data of the system 3040. In one example, the application 3020 may include at least one piece of data generated while the application 3020 is executed in the electronic device 10. In one example, the system 3040 may include at least one piece of data stored in the memory 120 of the electronic device 10. In one example, the application 3020 of FIG. 3A may include, for example, data corresponding to an application/service module 840 of FIG. 8. In one example, the system 3040 of FIG. 3A may include, for example, data corresponding to a database 830 of FIG. 8.

According to an embodiment, the data control module 3100 may collect data required for prompt generation from the data reference module 3000. In one example, the data control module 3100 may collect user personal information stored in the memory 120 of the electronic device 10 from the data reference module 3000. In one example, the data control module 3100 may periodically collect system information of the electronic device 10 stored in the memory 120 from the data reference module 3000.

According to an embodiment, the input field module 3200 may collect user input data entered into the electronic device 10. In one example, the input field module 3200 may collect the user input data entered into a search window displayed on at least a partial region of the display 110 of the electronic device 10. In one example, the input field module 3200 may identify user input entered based on a widget displayed on at least a partial region of the display 110. In one example, the user input may include a voice input, a gesture, or a change in a positional state of the electronic device 10 by a user (e.g., a motion of shaking the electronic device 10 or a motion of flipping the electronic device 10).

According to an embodiment, the trigger generation module 3300 may generate data suitable for prompt generation from the data collected in the data control module 3100 and/or the input field module 3200. In one example, the data suitable for prompt generation may correspond to a trigger. In one example, the trigger may correspond to data likely to cause generation of a user interface from data included in the user personal information and/or the user input. For example, the trigger generation module 3300 may identify voice data (e.g., an airport, an admission ticket, or a graduation ceremony) corresponding to an event (e.g., a trip, an examination, or a graduation) of the user among user voice inputs to the electronic device, and voice data corresponding to an event start date, an event progress time, and/or an event occurrence place, and may generate identified data as a trigger. For example, the trigger generation module 3300 may identify data (e.g., airplane mode setting input occurring during a first week of every month) corresponding to an event (e.g., a periodic overseas business trip) of the user among user inputs to the electronic device, and may generate identified data as a trigger.

According to an embodiment, the UI generation module 3400 may include a prompt manager 3420 and/or an app/action set generator 3440. In one example, the UI generation module 3400 may generate a prompt based on the trigger received from the trigger generation module 3300. In one example, the prompt manager 3420 may generate at least one prompt using the prompt generation algorithm. In one example, the prompt generation algorithm may correspond to an algorithm stored in the memory 120 or an algorithm stored in an external device. In one example, the prompt generation algorithm may generate the prompt using a generative artificial intelligence model. In one example, the prompt manager 3420 may generate the prompt based on the trigger received from the trigger generation module 3300. In one example, an app/action set generator 3440 may generate a UI for executing an application list and/or an action of the electronic device 10 (e.g., switching to a power saving mode, executing a camera application, or accessing a uniform resource locator (URL)) corresponding to the prompt.

According to an embodiment, the UI generation module 3400 may generate an application/action set based on the prompt generated by the prompt manager 3420. In one example, an application/action set may correspond to a user interface including a user interface for displaying an application recommended to the user and/or a user interface controlling an operation of the electronic device 10. In one example, the app/action set generator 3440 may generate a user interface corresponding to the application/action set by inputting the prompt received from the prompt manager 3420 into the generative artificial intelligence model.

According to an embodiment, the UI output module 3500 may display the user interface received from the UI generation module 3400 on at least a partial region of the display 110 of the electronic device 10. In one example, the UI output module 3500 may display the user interface on at least a partial region of the display 110 based on the user personal information and/or the user input. For example, when the user input occurs in the search window of the home screen, the UI output module 3500 may display the user interface received from the UI generation module 3400 in a display region below the search window into which the user input is input on the home screen. In one example, the UI output module 3500 may transform the user interface based on a display environment in which the user interface is displayed. For example, when the generated user interface is displayed on the home screen of the electronic device 10, the UI output module 3500 may adjust a color and/or a size of the generated user interface based on a background color of the home screen and a size of the home screen.

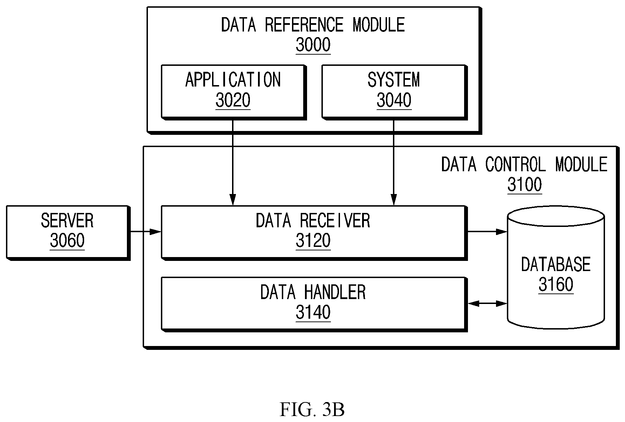

Referring to FIG. 3B, the data control module 3100 may include a data receiver 3120, a data handler 3140, and/or a database 3160. In one example, the data control module 3100 may receive data corresponding to the application 3020 and/or the system 3040 of the electronic device 10 from the data reference module 3000. In one example, the data control module 3100 may receive data from the server 3060.

According to an embodiment, the data receiver 3120 may collect useful data that may be used for user interface generation. In one example, the data receiver 3120 may collect data stored in the application 3020 from the application 3020, may collect data related to a state of the electronic device 10 (e.g., a Bluetooth connection state or a WiFi connection state) from the system 3040 of the electronic device 10, and may collect data related to a user account from the server 3060. In one example, the data receiver 3120 may control a condition of received data based on a preset period, a preset operation, or a preset reception restriction setting (e.g., contacts data are not received).

According to an embodiment, the database 3160 may store data received by the data receiver 3120. In one example, the data stored in the database 3160 may include text-form data, voice-form data, and/or gesture-operation-form data.

According to an embodiment, the data handler 3140 may refer to data stored in the database 3160. In one example, the data handler 3140 may extract at least one piece of data from data stored in the database 3160. In one example, the data handler 3140 may transmit data referred to from the database 3160 to an external device or at least one module included in the electronic device 10 (e.g., the trigger generation module 3300). For example, the data handler 3140 may transmit data referred to from the database 3160 to a trigger generator 3320 of the trigger generation module 3300.

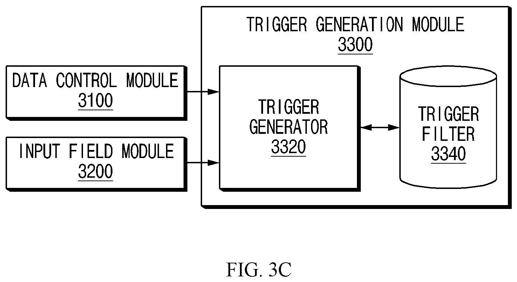

Referring to FIG. 3C, the trigger generation module 3300 may include the trigger generator 3320 and/or a trigger filter 3340. In one example, the trigger generator 3320 may receive data for trigger generation from the data control module 3100 and/or the input field module 3200. In one example, the trigger generator 3320 may receive data corresponding to the user personal information from the data handler 3140 of the data control module 3100. In one example, the trigger generator 3320 may receive data corresponding to the user input from the input field module 3200.

According to an embodiment, the trigger generator 3320 may generate a trigger based on the data received from the data control module 3100 and/or the input field module 3200. In one example, the trigger generator 3320 may identify data suitable for prompt generation from the data received from the data control module 3100 and/or the input field module 3200. In one example, the trigger generator 3320 may generate the identified data as a trigger. For example, when the trigger generation module 3300 receives the user input "what should be prepared for a meeting next week" from the input field module 3200, the trigger generator 3320 may identify text data "next week," "meeting," "what," and "prepare" from the user input and may generate the identified text data as a trigger.

According to an embodiment, the trigger filter 3340 may filter the generated triggers. In one example, the trigger filter 3340 may delete a trigger having no relevance to the generated triggers among the triggers generated in the trigger generator 3320 or may delete a trigger including harmful content. In one example, a reference according to which the trigger filter 3340 filters the generated triggers may be preset or may be updated by an external device (e.g., the server).

Referring to FIG. 3D, the UI generation module 3400 may include the prompt manager 3420 and/or the app/action set generator 3440. In one example, a prompt generator 3421 may include an application-related prompt 3422, an action-related prompt 3423, a widget-related prompt 3424, a user/device-related prompt 3425, and/or a UI configuration-related prompt 3426. In one example, the prompt manager 3420 of the UI generation module 3400 may receive the trigger generated from the trigger generation module 3300. In one example, the prompt manager 3420 may be referred to as a software module distinct from the UI generation module 3400. For example, the prompt manager 3420 may receive data from the trigger generation module 3300 and may transmit data generated in the prompt manager 3420 to the UI generation module 3400.

According to an embodiment, the prompt manager 3420 may generate a prompt based on the trigger received from the trigger generation module 3300. In one example, the prompt manager 3420 may generate at least one prompt using the prompt generator 3421. In one example, the prompt may correspond to a prompt requesting data related to the trigger. In one example, the prompt generator 3421 may generate a prompt corresponding to the trigger based on the prompt generation algorithm. For example, the prompt generator 3421 may generate a prompt "collect application information associated with winter" based on a trigger "winter."

According to an embodiment, the prompt generated in the prompt generator 3421 may include the application-related prompt 3422, the action-related prompt 3423, the widget-related prompt 3424, the user/device-related prompt 3425, and/or the UI configuration-related prompt 3426.

According to an embodiment, the prompt generator 3421 may generate at least one prompt associated with the received trigger, according to the prompt generation algorithm. For example, the prompt generator 3421 may generate the app-related prompt 3422 associated with the received trigger, the action-related prompt 3423 associated with the received trigger (e.g., execution of a call application of the electronic device 10 or a widget popup), the widget-related prompt 3424 associated with the received trigger, the user/device-related prompt 3425 associated with the received trigger, and/or the UI configuration-related prompt 3426 associated with the received trigger.

According to an embodiment, the user/device-related prompt 3425 may include a prompt requesting collection of data related to a screen resolution and/or a screen mode of the electronic device 10 and a prompt requesting collection of data related to a WiFi or Bluetooth connection state of the electronic device 10.

According to an embodiment, the UI configuration-related prompt 3426 associated with the trigger may include a prompt requesting adjustment of the user interface corresponding to the home screen when the trigger is generated based on the home screen. For example, when the trigger is generated based on the user input entered into the home screen and a grid of a current home screen is 4×5, the UI configuration-related prompt 3426 may include a prompt requesting that collected application information be arranged in a 4×2 array and then collected widget information be arranged in a 4×3 array. For example, when the grid of the current home screen is 4×5, the UI configuration-related prompt 3426 may include a prompt requesting that collected application information and collected widget information be arranged in a 4×5 array corresponding to the home screen grid arrangement of the electronic device 10.

According to an embodiment, the UI configuration-related prompt 3426 associated with the trigger may include a prompt requesting adjustment of the user interface corresponding to the search window when the trigger is generated based on the search window. For example, when the trigger is generated based on the user input entered into the search window, the UI configuration-related prompt 3426 may include a prompt requesting that eight items of collected action information be selected and arranged in a list form. For example, when the trigger is generated based on the user input entered into the search window, the UI configuration-related prompt 3426 may include a prompt requesting that collected action information be arranged in a list form of eight items in a lower portion of the search window displayed on at least a partial region of the display 110.

According to an embodiment, the prompt generator 3421 may generate a prompt for generating a user interface for determining whether additional user personal information and/or additional user input is required. For example, the prompt generator 3421 may generate the prompt "generate a user interface for determining whether additional information is required." In one example, the prompt generator 3421 may generate the prompt "generate a user interface for determining whether additional information is required," regardless of the trigger received from a trigger generation module (e.g., 3300 of FIG. 3A).

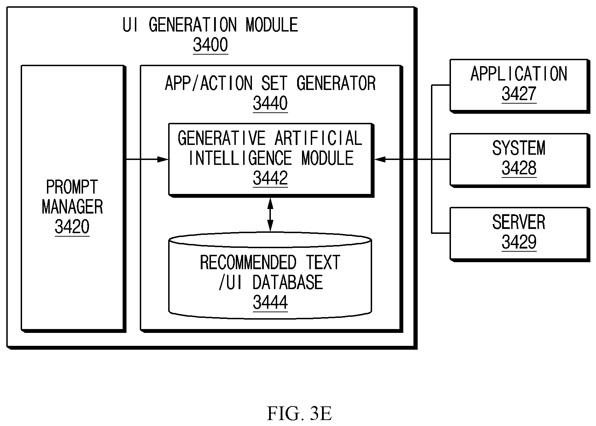

Referring to FIG. 3E, the UI generation module 3400 may include the prompt manager 3420 and/or the app/action set generator 3440. In one example, the app/action set generator 3440 may include a generative artificial intelligence module 3442 and/or a recommended text/UI database 3444. In one example, the UI generation module 3400 may transmit the prompt generated from the prompt manager 3420 to the app/action set generator 3440. The generative artificial intelligence module 3442 of FIG. 3E may correspond, for example, to the data generative artificial intelligence model 850 of FIG. 8.

An artificial intelligence model according to an embodiment may correspond to the generative artificial intelligence module 3442. In one example, the artificial intelligence model (e.g., 3442) may be a generative artificial intelligence model including at least one of a GAN, a VAE, or a Style GAN. In one example, the artificial intelligence model (e.g., 3442) may be an artificial intelligence model stored in the memory 120 or an artificial intelligence model stored in an external server device.

According to an embodiment, the generative artificial intelligence module 3442 may generate a user interface based on the prompt generated from the prompt manager 3420. In one example, the generative artificial intelligence module 3442 may receive data from the application 3427, a system 3428, and/or a server 3429. In one example, the generative artificial intelligence module 3442 may generate the user interface based on prompt input and data received from the application 3427, the system 3428, and/or the server 3429. The application 3427, the system 3428, and the server 3429 of FIG. 3E may correspond, for example, to the application 3020, the system 3040, and the server 3060 of FIG. 3B.

According to an embodiment, the generative artificial intelligence module 3442 may collect data related to the prompt from the application 3427, the system 3428, and/or the server 3429 based on the input prompt. The generative artificial intelligence module 3442 may configure and generate a user interface corresponding to the application/action set of the electronic device 10 based on the received prompt and the collected data.

According to an embodiment, the generative artificial intelligence module 3442 may include a module corresponding to the GAN, the VAE, or the Style GAN. In one example, the generative artificial intelligence module 3442 may correspond to an artificial intelligence module stored in the electronic device 10 or an artificial intelligence module stored in an external device. In one example, the generative artificial intelligence module 3442 may correspond to the generative AI model 850 of FIG. 8.

According to an embodiment, the generative artificial intelligence module 3442 may refer to the recommended text/UI database 3444 during generation of the user interface. In one example, the recommended text/UI database 3444 may store data that may be referred to for a format of a result generated by the generative artificial intelligence module 3442. In one example, the result generated by the generative artificial intelligence module 3442 may be stored in the recommended text/UI database 3444.

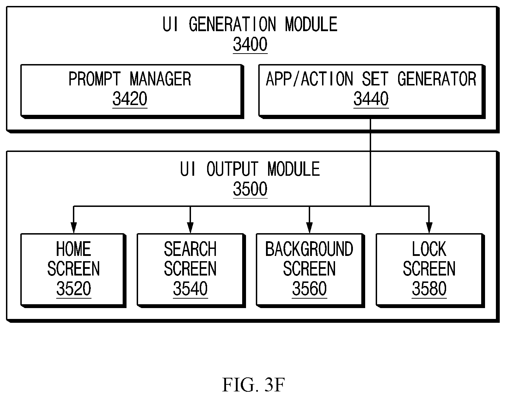

Referring to FIG. 3F, the UI output module 3500 may display a user interface received from the UI generation module 3400 on each of a home screen 3520, a search screen 3540, a background screen 3560, or a lock screen 3580. In one example, the UI output module 3500 may receive the user interface from the app/action set generator 3440 of the UI generation module 3400. In one example, the UI output module 3500 may display the received user interface on at least a partial region of the display 110 based on a prompt that has generated the received user interface.

According to an embodiment, the UI output module 3500 may determine a screen on which the user interface is to be displayed based on an output screen indicated in the prompt. For example, when user voice input "tell me tomorrow's schedule" occurs on the lock screen 3580, a first user interface for displaying widget data associated with tomorrow's schedule may be generated, and the UI output module 3500 may display the first user interface on the lock screen 3580 of the electronic device 10. In one example, the UI output module 3500 may transform the user interface based on the screen on which a user interface is displayed. For example, when the generated user interface is displayed on an external display of a foldable electronic device, the UI output module 3500 may adjust a size and/or a resolution of the user interface based on a size and/or a resolution of the external display of the foldable electronic device. For example, when an internal display is activated while the generated user interface is being displayed on the external display of the foldable electronic device, the UI output module 3500 may adjust the size and/or the resolution of a user interface based on a size and/or a resolution of an internal display.

FIG. 4 illustrates a data format of data transmitted to a prompt manager according to an embodiment.

Referring to FIG. 4, a trigger generation module (e.g., 3300 of FIG. 3A) may generate a trigger from received user personal information and/or user input. In one example, the trigger generated by the trigger generation module (e.g., 3300 of FIG. 3A) may be classified based on a preset data format. In one example, the preset data format may include classification criteria of "goal," "type," or "reference_data." In one example, classification criteria of "reference_data" may include detailed classification criteria of "original_input_text," "date_time," "location," "attendee," "weather," "shopping," or "productivity." The classification criteria illustrated in FIG. 4 are merely examples, and other types of classification criteria may be preset and other types of classification criteria may be included in the data format. For example, the preset data format may further include detailed classification criteria of "event" and "transportation."

According to an embodiment, data corresponding to "goal" may correspond to a trigger indicating an output screen of a user interface. In one example, the data corresponding to "goal" may be determined based on an interface environment (e.g., a home screen, a lock screen, a speaker, a widget, or a search window) in which user personal information and/or user input occur. For example, when the user input occurs on the home screen, a trigger "create_homescreen," which is a trigger for generating the user interface on the home screen, may be generated. For example, when the user input occurs in the search window, a trigger "create_finder_result," which is a trigger for generating the user interface corresponding to the search window, may be generated.

In one example, data corresponding to "type" may correspond to a trigger indicating a purpose of the user interface. In one example, a recommended application/action may be determined according to the trigger corresponding to "type." In one example, when data matching a type set stored in the electronic device 10 is identified from the user personal information and/or the user input, the identified data may be determined as the data corresponding to "type." For example, when schedule information or text including the schedule information is identified from the user personal information and/or the user input, data "schedule" may be determined as the data corresponding to "type." In this case, a trigger "schedule," which may generate a schedule management application or a contacts display widget, may be generated. For example, when data related to music or media playback are identified from the user personal information and/or the user input, data "play_media" may be determined as the data corresponding to "type." In this case, a trigger "play_media," which may display earphone connection information or a media playback application, may be generated.

According to an embodiment, data corresponding to "reference_data" may correspond to the user personal information and/or the user input. In one example, "reference_data" may correspond to data to be referred to for generating the user interface. In one example, "reference_data" may include data corresponding to "original_input_text," "date_time," "location," "attendee," "weather," "shopping," and/or "productivity." In one example, a subcomponent (e.g., "date_time," "location") of "reference_data" may vary depending on the data corresponding to "type."

According to an embodiment, the data corresponding to "original_input_text" may correspond to the user personal information and/or the user input. In one example, the data corresponding to "original_input_text" may include the user personal information, voice input, a gesture, or a position state change of the electronic device 10 by a user (e.g., a motion of shaking the electronic device 10 or a motion of flipping the electronic device 10).

According to an embodiment, data corresponding to "date_time" may correspond to a trigger related to time information to which the user interface may refer. In one example, the data corresponding to "date_time" may be determined based on time information included in the user personal information and/or the user input. For example, when the schedule information stored in the electronic device 10 includes text "OO Land 10 AM, friend Kim OO," a trigger "18392739042" corresponding to time information "10 AM" may be generated.

According to an embodiment, data corresponding to "location" may correspond to a trigger related to location information to which the user interface may refer. In one example, the data corresponding to "location" may be determined based on the location information included in the user personal information and/or the user input. For example, when the schedule information stored in the electronic device 10 includes text "OO Land 10 AM, friend Kim OO," a trigger "OO Land" or "OO-si OO-dong (e.g., an address of OO Land)" corresponding to the location information may be generated. In one example, the data corresponding to "location" may include data recorded in a form of latitude and longitude.

According to an embodiment, data corresponding to "attendee" may correspond to a trigger related to companion information to which the user interface may refer. In one example, the data corresponding to "attendee" may be determined based on the companion information included in the user personal information and/or the user input. For example, when the schedule information stored in the electronic device 10 includes text "OO Land 10 AM, friend Kim OO," a trigger "Kim OO," "010-XXXX-XXXX," or "kss@mail.com" corresponding to the companion information may be generated.

According to an embodiment, data corresponding to "weather" may correspond to a trigger related to weather information to which the user interface may refer. In one example, the data corresponding to "weather" may be determined based on the weather information included in the user personal information and/or the user input. For example, when the schedule information stored in the electronic device 10 includes text "OO Land 10 AM," a trigger "sunny" corresponding to the weather information at 10 AM at OO Land may be generated. In one example, an artificial intelligence model may be used in a trigger generation process of a trigger generation module (e.g., 3300 of FIG. 3A). For example, the trigger generation module (e.g., 3300 of FIG. 3A) may retrieve an address of OO Land, a visit date, and the weather information corresponding to 10 AM based on the user personal information indicating "10 AM at OO Land," using the artificial intelligence model, and may extract data corresponding thereto.

According to an embodiment, data corresponding to "shopping" may correspond to a trigger related to shopping information to which the user interface may refer. In one example, the data corresponding to "shopping" may be determined based on shopping information included in the user personal information and/or the user input. For example, when the schedule information stored in the electronic device 10 includes text "OO Land 10 AM," a trigger "OO Land" corresponding to the shopping information may be generated.

According to an embodiment, data corresponding to "productivity" may correspond to a trigger related to additional activity information to which the user interface may refer. In one example, the data corresponding to "productivity" may be determined based on additional activity information included in the user personal information and/or the user input. For example, when the schedule information stored in the electronic device 10 includes text "OO Land 10 AM," a trigger "camera" or "gallery" corresponding to the additional activity information may be generated.

According to an embodiment, data corresponding to "event" may correspond to a trigger related to event information to which the user interface may refer. For example, when the schedule information stored in the electronic device 10 includes text "father's seventieth birthday," a trigger "seventieth birthday" or "birthday celebration" corresponding to the event information may be generated. In one example, data corresponding to "transportation" may correspond to a trigger related to transportation information to which the user interface may refer. For example, when user input entered into the search window includes text "OO Land," a trigger "train," "traffic condition," or "public transportation" corresponding to the transportation information may be generated.

According to an embodiment, the user personal information and/or the user input received in the trigger generation module (e.g., 3300) may be classified based on classification criteria included in the data format. In one example, classified personal information and/or user input may correspond to a trigger. For example, when user input "I am going to OO Land tomorrow, what should I do?" is entered into the search window of the home screen, data "I am going to OO Land tomorrow, what should I do?" may be classified based on classification criteria included in the data format. The data "I am going to OO Land tomorrow, what should I do?" may correspond to data "create_homescreen" for "goal," "schedule" for "type," "tomorrow" for "date_time," "OO Land" for "location," "Kim OO" for "attendee," and "sunny" for "weather." "create_homescreen," "schedule," "OO Land," "Kim OO," or "sunny" may respectively correspond to triggers.

According to an embodiment, the user personal information and/or the user input received in the trigger generation module (e.g., 3300) may be reconstructed by the processor 100 based on the preset data format. In one example, the user personal information and/or the user input received in the trigger generation module (e.g., 3300) may be reconstructed into a JSON-based data format based on the preset data format. For example, the user personal information and/or the user input received in the trigger generation module (e.g., 3300) may be converted into a preset compressed file format.

FIGS. 5A to 5B illustrate user interfaces displayed on a display based on user personal information according to an embodiment.

Referring to FIG. 5A, the electronic device 10 may generate a user interface based on data stored in a user schedule. In one example, referring to an execution screen 500 of a calendar application of the electronic device 10, data related to a schedule including September 17, 8 AM, and father's seventieth birthday may be stored in the calendar application. In one example, September 17, 8 AM, and father's seventieth birthday may correspond to user personal information transmitted from a data control module (e.g., 3100 of FIG. 3A) to a trigger generation module (e.g., 3300 of FIG. 3A).

According to an embodiment, referring to a screen 510 on which the user interface of the electronic device 10 is displayed, the user interface may include a user interface related to schedule guidance, a user interface 515 for displaying a recommended application configuration, and a user interface 516 for inducing an action of the electronic device 10. In one example, the user interface displayed on the screen 510 on which the user interface is displayed may correspond to a user interface generated based on user personal information including September 17, 8 AM, and father's seventieth birthday.

According to an embodiment, the trigger generation module (e.g., 3300 of FIG. 3A) may generate triggers "September 17," "8 AM," "father," and "seventieth birthday" based on the user personal information including September 17, 8 AM, and father's seventieth birthday. For example, the trigger generation module (e.g., 3300 of FIG. 3A) may extract "September 17" and "8 AM," which are triggers corresponding to "date_time," extract "father," which is a trigger corresponding to "attendee," and extract "seventieth birthday," which is a trigger corresponding to "event," based on the user personal information including September 17, 8 AM, and father's seventieth birthday.

According to an embodiment, a prompt manager (e.g., 3420 of FIG. 3A) may receive the triggers from the trigger generation module (e.g., 3300 of FIG. 3A) and may generate prompts. For example, the prompt manager (e.g., 3420 of FIG. 3A) may generate prompts "collect widget information associated with September 17," "collect widget information associated with 8 AM," "collect widget information associated with seventieth birthday," "collect action information associated with father," and "collect application information associated with seventieth birthday" based on the triggers received from the trigger generation module (e.g., 3300 of FIG. 3A).

According to an embodiment, when the prompts generated by the prompt manager (e.g., 3420 of FIG. 3A) are input to a generative artificial intelligence module (e.g., 3442 of FIG. 3E) of an app/action set generator (e.g., 3440 of FIG. 3A), user interfaces corresponding to the prompts may be generated. For example, the generative artificial intelligence model (e.g., 3442 of FIG. 3E) may generate a user interface including text "Tomorrow is father's seventieth birthday. Weekend traffic congestion is expected, so departure earlier than usual is required" based on the input prompts.

According to an embodiment, in the user interface including text "Tomorrow is father's seventieth birthday. Weekend traffic congestion is expected, so departure earlier than usual is required," data "father's seventieth birthday" 511 and "weekend" 512 may correspond to data generated based on the schedule information stored in a calendar application, data "traffic congestion is expected" 513 may correspond to data generated based on date and time information displayed in the calendar application, and data "departure earlier than usual is required" 514 may correspond to data generated based on execution history information (e.g., execution pattern history of a navigation application at 9 AM every day) of a system (e.g., 3040 of FIG. 3A) or an application (e.g., 3020 of FIG. 3A) of the electronic device 10.

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate the user interface 515 for recommending related applications based on the input prompts.

According to an embodiment, the user interface 515 for recommending related applications may be generated based on the prompt "collect application information associated with seventieth birthday." In one example, the user interface 515 for recommending related applications may include an interface listing installed applications and uninstalled applications together. For example, the user interface 515 for recommending related applications may recommend an application a and an application b installed in the electronic device 10. For example, the user interface 515 for recommending related applications may recommend an application c not installed in the electronic device 10. In one example, the user interface 515 for recommending related applications may include a user interface for guiding installation of the application c. In one example, the generative artificial intelligence module (e.g., 3442 of FIG. 3E) may identify the applications a, b, and c as recommended applications based on the prompts received from the prompt manager (e.g., 3420 of FIG. 3E). The user interface 515 for recommending related applications may include a user interface for displaying installed applications (e.g., the applications a and b) among the applications a, b, and c identified by the generative artificial intelligence module (e.g., 3442 of FIG. 3E) as images having solid-line borders and displaying an uninstalled application (e.g., application c) as an image having a dashed-line border.

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate the user interface 516 for inducing an action of the electronic device 10 based on the input prompts.

According to an embodiment, the user interface 516 for inducing an action of the electronic device 10 may be generated based on the prompt "collect action information associated with father" and/or the prompt "collect action information associated with seventieth birthday." In one example, the user interface 516 for inducing an action of the electronic device 10 may include an action of executing an application or changing a setting of the electronic device 10. For example, the user interface 516 for inducing an action of the electronic device 10 may include a user interface for displaying instruction content related to the seventieth birthday (e.g., "please make sure to bring a gift purchased from an application d before departure") and/or a user interface for displaying a purchase-history confirmation link of the application d (e.g., an online shopping mall application). For example, the user interface 516 for inducing an action of the electronic device 10 may include a user interface for displaying instruction content related to father (e.g., please try calling mother before departure) and/or a user interface connecting a call to mother through an application e (e.g., a call application).

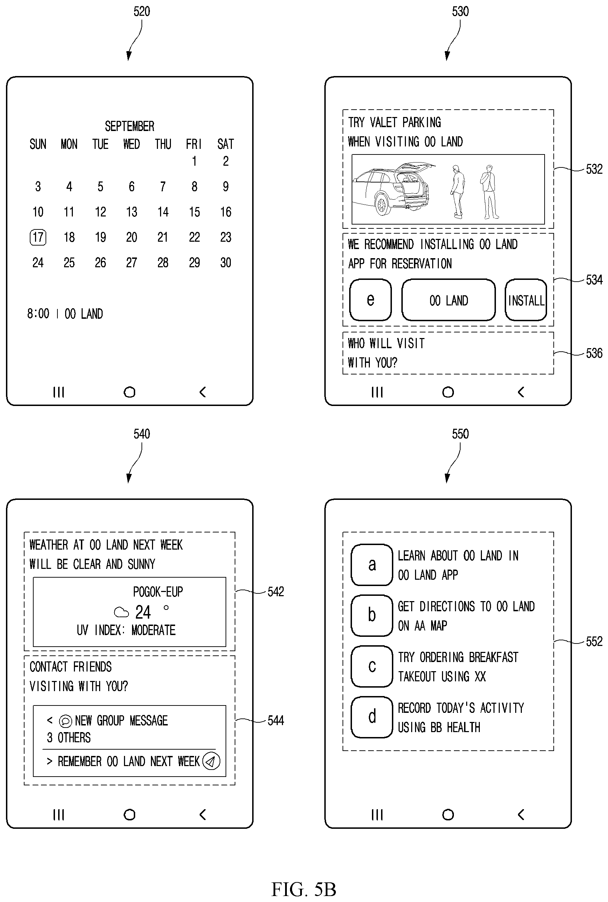

Referring to FIG. 5B, the electronic device 10 may generate different user interfaces over time based on data stored in the user schedule. In one example, referring to the execution screen 520 of the calendar application of the electronic device 10, data related to a schedule including September 17, 8 AM, and OO Land may be stored in the calendar application. In one example, September 17, 8 AM, and OO Land may correspond to the user personal information transmitted from the data control module (e.g., 3100 of FIG. 3A) to the trigger generation module (e.g., 3300 of FIG. 3A).

According to an embodiment, the electronic device 10 may display, on at least a partial region of the display 110, a user interface including an application and/or an action corresponding to one month (e.g., August 17) before a reference date (e.g., September 17) based on the user personal information (e.g., information stored in the calendar application). In one example, referring to a screen 530 on which a user interface is displayed, a user interface may include a user interface 532 related to a valet-parking service available when visiting OO Land, a user interface 534 for displaying an application for reserving OO Land, and a user interface 536 for inducing an action for inputting companion information. In one example, the user interface displayed on the screen 530 on which the user interface is displayed may correspond to a user interface available one month before (e.g., August 17 at 8 AM) based on user personal information including September 17, 8 AM, and OO Land.

According to an embodiment, the electronic device 10 may display, on at least a partial region of the display 110, a user interface including an application and/or an action corresponding to one week (e.g., September 10) before the reference date (e.g., September 17) based on the user personal information (e.g., information stored in the calendar application). In one example, referring to the screen 540 on which the user interface is displayed, a user interface may include a user interface 542 related to weather information about OO Land and a user interface 544 for inducing an action (e.g., transmission of a group message "remember OO Land next week" based on the companion information) for transmitting a message related to a schedule to a companion. In one example, the companion information may correspond to companion information stored in the schedule information and/or companion information added based on the user interface (e.g., 536) inducing the action for inputting companion information. In one example, the user interface displayed on the screen 540 on which the user interface is displayed may correspond to a user interface available one week before (e.g., September 10 at 8 AM) based on user personal information including September 17, 8 AM, and OO Land.

According to an embodiment, the electronic device 10 may display, on at least a partial region of the display 110, a user interface including an application and/or an action corresponding to the reference date (e.g., September 17) based on the user personal information (e.g., information stored in the calendar application). In one example, referring to a screen 550 on which a user interface is displayed, the user interface may include a user interface 552 for displaying an application related to OO Land. In one example, the user interface displayed on the screen 550 on which the user interface is displayed may correspond to a user interface available on the reference date (e.g., September 17) of the user personal information based on the user personal information including September 17, 8 AM, and OO Land.

According to an embodiment, the user interface 552 displayed on the screen 550 on which the user interface is displayed may include an application a for checking event information of OO Land, an application b for checking transportation information of OO Land, an application c for checking meal-order information at 8 AM, and/or an application d for recording biometric exercise information on September 17. For example, the user interface 552 displayed on the screen 550 on which the user interface is displayed may include a user interface for displaying a URL for checking the event information of OO Land and/or a user interface for inducing a call-connection action to a service center of OO Land.

According to an embodiment, times at which user interfaces illustrated in FIG. 5B are generated (e.g., one month before, one week before, or a reference date) are merely examples and are not limited to these examples. For example, the electronic device 10 may display, on at least a partial region of the display 110, the user interface (e.g., 532) related to a valet-parking service available when visiting OO Land and/or the user interface 544 for inducing an action (e.g., transmission of the group message "remember OO Land next week" based on the companion information) for transmitting the message related to the schedule to the companion, one week after a point in time (e.g., June 17) when data stored in the user schedule is stored. For example, the electronic device 10 may display, on at least a partial region of the display 110, the user interface 534 for displaying the application for reserving OO Land and/or the user interface 542 related to weather about OO Land at a point in time when the user has input (e.g., September 10, 10 days before the reference date, or one month after a point in time when the data stored in the user schedule are stored). According to an embodiment, the user interfaces of FIG. 5B (e.g., 532, 534, 536, 542, 544, and/or 552) may correspond to the triggers generated by the trigger generation module (e.g., 3300 of FIG. 3A), the prompts generated by the prompt manager (e.g., 3420 of FIG. 3A), and/or the user interfaces generated by the generative artificial intelligence module (e.g., 3442 of FIG. 3E). Operations of the trigger generation module (e.g., 3300 of FIG. 3A), the prompt manager (e.g., 3420 of FIG. 3A), and/or the generative artificial intelligence module (e.g., 3442 of FIG. 3E) are substantially identical to those described with reference to FIG. 5A, and thus repeated descriptions thereof will be omitted.

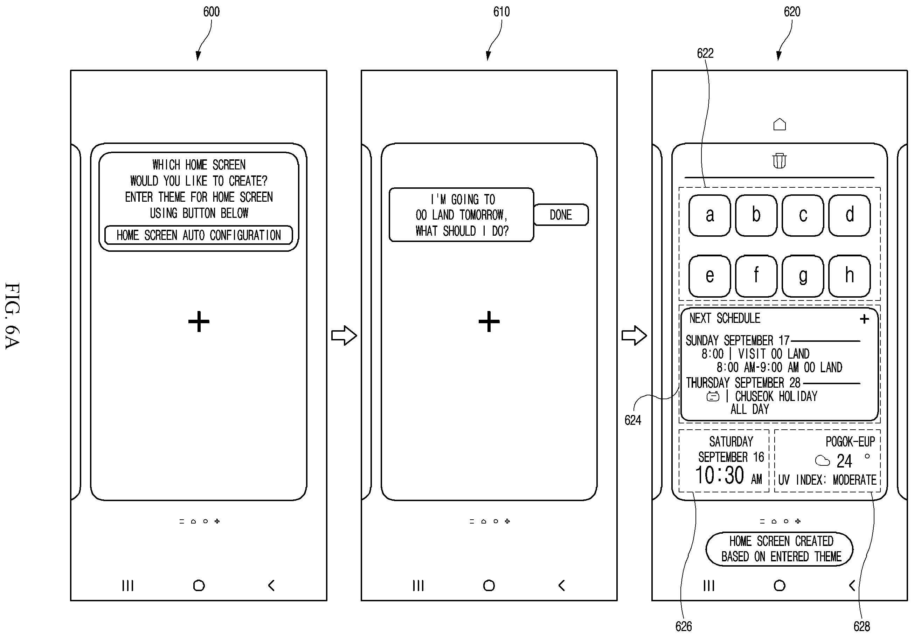

FIGS. 6A to 6C illustrate user interfaces displayed on a display based on user personal information or user input according to an embodiment.

Referring to FIG. 6A, the electronic device 10 may generate a user interface based on user input. In one example, the electronic device 10 may display, on at least a partial region of the display 110, a home screen 600 on which a user interface for guiding home screen configuration is displayed, a home screen 610 on which a user interface for guiding user input is displayed, and/or an application and/or action set display screen 620 based on user input. In one example, the home screen 600 on which the user interface for guiding home screen configuration is displayed, the home screen 610 on which the user interface for guiding user input is displayed, and the application and/or action set display screen 620 may be sequentially displayed on at least a partial region of the display 110 based on user input. For example, based on user input entered into the home screen 600 on which the user interface for guiding home screen configuration is displayed, the home screen 610 on which the user interface for guiding user input is displayed may be displayed on at least a partial region of the display 110, and based on user input entered into the home screen 610 on which the user interface for guiding user input is displayed, the application and/or action set display screen 620 may be displayed on at least a partial region of the display 110.

According to an embodiment, the home screen 600 on which the user interface for guiding home screen configuration is displayed may include a user interface for guiding configuration of a home screen by the user. For example, the user interface for guiding home screen configuration may confirm an intent of the user to generate the home screen based on an interface including text for confirming whether to generate the home screen. For example, the home screen 600 on which the user interface for guiding home screen configuration is displayed may include a user interface "home screen auto configuration." The electronic device 10 may display the home screen 610 on which the user interface for guiding user input is displayed based on a user touch input corresponding to the user interface "home screen auto configuration."

According to an embodiment, the home screen 610 on which the user interface for guiding user input is displayed may include a user interface for guiding input from the user. For example, the user interface for guiding user input may include an input window in which user input is performed. In one example, user input entered into the input window may include text input of the user, voice input, or file-type input. For example, the home screen 610 on which the user interface for guiding user input is displayed may receive a text input "I am going to OO Land tomorrow, what should I do?" from the user.

According to an embodiment, the application and/or action set display screen 620 may include a screen on which a user interface generated based on user input is displayed on at least a partial region of the display 110. In one example, when text input "I am going to OO Land tomorrow, what should I do?" is received from the user, the electronic device 10 may generate a user interface by extracting a trigger based on the input "I am going to OO Land tomorrow, what should I do?", generating a prompt using the extracted trigger, and inputting the generated prompt to the generative artificial intelligence model (e.g., 3442 of FIG. 3E). In one example, the electronic device 10 may display the generated user interface on at least a partial region of the display 110.

According to an embodiment, referring to the application and/or action set display screen 620, the user interface may include a recommended application list 622, a user interface 624 for displaying at least a portion of a calendar application, a user interface 626 for indicating a current date and time, and/or a user interface 628 for displaying at least a portion of a weather application. In one example, the user interface included in the application and/or action set display screen 620 may correspond to the user interface generated based on the user input "I am going to OO Land tomorrow, what should I do?" The user interface included in the application and/or action set display screen 620 is merely a user interface according to an embodiment, and an arrangement configuration of user interfaces is not limited to this example. For example, the application and/or action set display screen 620 may arrange the recommended application list 622 below the user interface 624 for displaying at least a portion of the calendar application. For example, the application and/or action set display screen 620 may include a user interface for displaying at least a portion of the gallery application.

According to an embodiment, a trigger generation module (e.g., 3300 of FIG. 3A) may generate triggers "tomorrow" and "OO Land" based on the user input "I am going to OO Land tomorrow, what should I do?" In one example, the trigger generation module (e.g., 3300 of FIG. 3A) may additionally generate a trigger based on user personal information stored in the electronic device 10 together with the user input. In one example, the trigger generation module (e.g., 3300 of FIG. 3A) may generate a trigger "A" based on the content of messages exchanged with A regarding OO Land that are stored in an application (e.g., 3427 of FIG. 3E). For example, the trigger generation module (e.g., 3300 of FIG. 3A) may extract "tomorrow," which is a trigger corresponding to "date_time," and extract "OO Land," which is a trigger corresponding to "location," based on the user input "I am going to OO Land tomorrow, what should I do?" For example, the trigger generation module (e.g., 3300 of FIG. 3A) may extract "A," which is a trigger corresponding to "attendee," based on the content of messages exchanged with A regarding OO Land that are stored in the application (e.g., 3427 of FIG. 3E).

According to an embodiment, a prompt manager (e.g., 3420 of FIG. 3A) may receive the triggers from the trigger generation module (e.g., 3300 of FIG. 3A) and may generate prompts. For example, the prompt manager (e.g., 3420 of FIG. 3A) may generate prompts "collect widget information associated with tomorrow (e.g., September 17)," "collect widget information associated with OO Land," "collect application information associated with A," and "collect application information associated with OO Land" based on the triggers received from the trigger generation module (e.g., 3300 of FIG. 3A).

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate the recommended application list 622 based on the input prompts.

According to an embodiment, the recommended application list 622 may be generated based on the prompts "collect application information associated with A" and "collect application information associated with OO Land." In one example, the recommended application list 622 may include applications a, d, and g, which are applications related to A (e.g., a chat application and a contacts application). In one example, the recommended application list 622 may include applications b, c, e, f, and h, which are applications related to OO Land (e.g., an OO Land application and a discount coupon collection application). In one example, the recommended application list 622 may recommend an uninstalled application. In one example, the recommended application list 622 may include a user interface for guiding installation of the uninstalled application.

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate a user interface including a widget of the electronic device 10 based on the input prompts.

According to an embodiment, the user interface 624 including at least one widget may be generated based on the prompts "collect widget information associated with tomorrow (e.g., September 17)" and/or "collect widget information associated with OO Land." In one example, the user interface including at least one widget may include a user interface for cropping and displaying at least a portion of a screen of an application in a popup form or editing and displaying collected data. For example, the user interface including at least one widget may include a user interface for displaying at least a portion of the calendar application related to OO Land (e.g., a portion of the user interface 624 corresponding to OO Land schedule information) and/or a user interface for displaying at least a portion of the calendar application related to tomorrow (e.g., September 17) (e.g., a portion of the user interface 624 corresponding to schedule information for September 17 or a portion corresponding to upcoming holiday schedule information for September 17). For example, the user interface including at least one widget may include the user interface 628 for displaying content associated with OO Land.

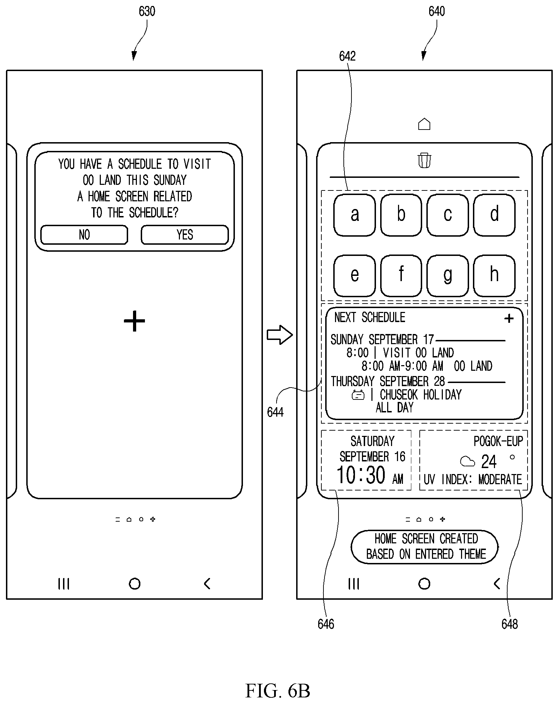

Referring to FIG. 6B, the electronic device 10 may generate a user interface based on the user personal information. In one example, the electronic device 10 may display, in at least a portion of the display 110, a home screen 630 on which the user interface for guiding home screen configuration is displayed and/or an application and/or action set display screen 640 based on the user personal information. In one example, the home screen 630 on which the user interface for guiding home screen configuration is displayed and the application and/or action set display screen 640 may be sequentially displayed on at least a portion of the display 110 based on user input. For example, the application and/or action set display screen 640 may be displayed on at least a portion of the display 110 based on the user input entered into the home screen 630 on which the user interface for guiding home screen configuration is displayed.

According to an embodiment, the home screen 630 on which the user interface for guiding home screen configuration is displayed may include a user interface for guiding configuration of a home screen by the user. For example, the user interface for guiding home screen configuration may include an interface including text that, based on schedule information identified from the user personal information (e.g., an OO Land visit schedule recorded in a message transmission application), displays the schedule information and confirms whether to generate the home screen. For example, the home screen 630 on which the user interface for guiding home screen configuration is displayed may include a user interface "yes" and/or "no." The electronic device 10 may display the application and/or action set display screen 640 based on a touch input of the user corresponding to the user interface "yes."

According to an embodiment, referring to FIG. 6A together, the home screen 630 on which the user interface for guiding home screen configuration as illustrated in FIG. 6B is displayed may include at least one component of the home screen 600 on which the user interface for guiding home screen configuration as illustrated in FIG. 6A is displayed. In one example, the home screen 600 on which the user interface for guiding home screen configuration as illustrated in FIG. 6A is displayed may include a user interface for guiding the user to provide user input for reference in home screen configuration. Correspondingly, the home screen 630 on which the user interface for guiding home screen configuration as illustrated in FIG. 6B is displayed may include a user interface for guiding home screen configuration based on the information identified from the user personal information (e.g., an OO Land visit schedule recorded in a message transmission application).

According to an embodiment, the application and/or action set display screen 640 may include a screen on which the user interface generated based on the user personal information is displayed on at least a portion of the display 110. In one example, the electronic device 10 may generate a user interface by extracting a trigger based on the user personal information stored in the electronic device 10 (e.g., travel information recorded in the calendar application and business trip information stored in a messenger application), generating a prompt using the extracted trigger, and inputting the generated prompt to a generative artificial intelligence model (e.g., 3442 of FIG. 3E). In one example, the electronic device 10 may display the generated user interface on at least a partial region of the display 110.

According to an embodiment, referring to the application and/or action set display screen 640, the user interface may include a recommended application list 642, a user interface 644 for displaying at least a portion of the calendar application, a user interface 646 for indicating a current date and time, and a user interface 648 for displaying at least a portion of the weather application. The user interface included in the application and/or action set display screen 640 is merely a user interface according to an embodiment, and an arrangement configuration of user interfaces is not limited to this example. For example, the application and/or action set display screen 640 may include a user interface for displaying at least a portion of a photo application and/or a user interface for displaying at least a portion of a messenger application. In one example, the user interface included in the user interface display screen 640 may correspond to the user interface generated based on the user personal information stored in the electronic device 10 (e.g., travel information recorded in the calendar application).

According to an embodiment, referring to FIG. 6A together, the application and/or action set display screen 620 of FIG. 6A and the application and/or action set display screen 640 of FIG. 6B may include identical or similar components. For example, the prompt generated corresponding to the user input to the home screen 610 of FIG. 6A and the prompt generated corresponding to the user personal information referenced in the home screen 630 of FIG. 6B may be identical or similar. For example, the application and/or action set display screen 620 of FIG. 6A and the application and/or action set display screen 640 of FIG. 6B may include identical or similar user interfaces generated based on the identical or similar prompts. In one example, when the user input to the home screen 610 of FIG. 6A and the user personal information referenced in the home screen 630 of FIG. 6B are different from each other, the application and/or action set display screen 620 of FIG. 6A and the application and/or action set display screen 640 of FIG. 6B may include different components.

According to an embodiment, the trigger generation module (e.g., 3300 of FIG. 3A) may generate triggers "September 17" and "OO Land" based on the user personal information stored in the electronic device 10 (e.g., the travel information recorded in the calendar application). In one example, the trigger generation module (e.g., 3300 of FIG. 3A) may additionally generate a trigger based on the user personal information stored in the electronic device 10. For example, the trigger generation module (e.g., 3300 of FIG. 3A) may generate a trigger "driving" based on a user's execution pattern of a navigation application recorded in the electronic device 10 (e.g., execution of the navigation application at 10 A.M. every day). For example, the trigger generation module (e.g., 3300 of FIG. 3A) may extract "September 17," which is a trigger corresponding to "date_time," and extract "OO Land," which is a trigger corresponding to "location," based on the user personal information stored in the electronic device 10 (e.g., the travel information recorded in the calendar application). For example, the trigger generation module (e.g., 3300 of FIG. 3A) may extract "driving," which is a trigger corresponding to "productivity," based on the user's execution pattern of the navigation application recorded in the electronic device 10.

According to an embodiment, the prompt manager (e.g., 3420 of FIG. 3A) may receive the triggers from the trigger generation module (e.g., 3300 of FIG. 3A) and may generate prompts. For example, the prompt manager (e.g., 3420 of FIG. 3A) may generate prompts "collect widget information associated with September 17," "collect widget information associated with OO Land," "collect application information associated with driving," and "collect application information associated with OO Land" based on the triggers received from the trigger generation module (e.g., 3300 of FIG. 3A).

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate a recommended application list based on the input prompts.

According to an embodiment, the recommended application list 642 may be generated based on the prompts "collect application information associated with driving" and "collect application information associated with OO Land." In one example, the recommended application list 642 may include applications b, c, g, and h, which are applications related to driving (e.g., a gas station application and a navigation application). In one example, the recommended application list 642 may include applications a, d, e, and f, which are applications related to OO Land (e.g., a photo editing application and an accommodation reservation application). In one example, the recommended application list 642 may recommend an uninstalled application. In one example, the recommended application list 642 may include a user interface for guiding installation of the uninstalled application.

According to an embodiment, when the prompts generated by the prompt manager (e.g., 3420 of FIG. 3A) are input to the generative artificial intelligence module (e.g., 3442 of FIG. 3E) of the app/action set generator (e.g., 3440 of FIG. 3A), user interfaces corresponding to the prompts may be generated. For example, the generative artificial intelligence model (e.g., 3442 of FIG. 3E) may generate a user interface including a widget of the electronic device 10 based on the input prompts.

According to an embodiment, the user interface 644 including at least one widget may be generated based on the prompts "collect widget information associated with September 17" and/or "collect widget information associated with OO Land." In one example, the user interface including at least one widget may include a user interface for cropping and displaying at least a portion of a screen of an application in a popup form or editing and displaying collected data. For example, the user interface including at least one widget may include a user interface for displaying at least a portion of the calendar application related to OO Land (e.g., a portion of the user interface 644 corresponding to OO Land schedule information) and/or a user interface for displaying at least a portion of the calendar application related to tomorrow (e.g., September 17) (e.g., a portion of the user interface 644 corresponding to schedule information for September 17 or a portion corresponding to upcoming holiday schedule information for September 17).

According to an embodiment, the user interface including at least one widget may include a user interface for displaying at least a portion of the messenger application related to OO Land (e.g., a portion corresponding to an OO Land schedule conversation of the messenger application), a user interface 646 for indicating a current date and time so that comparison with the OO Land schedule is possible, and/or a user interface 648 for displaying at least a portion of the weather application related to September 17. For example, the user interface including at least one widget may include a user interface for displaying content associated with OO Land (e.g., current weather of OO Land and an address of OO Land in the user interface 648).

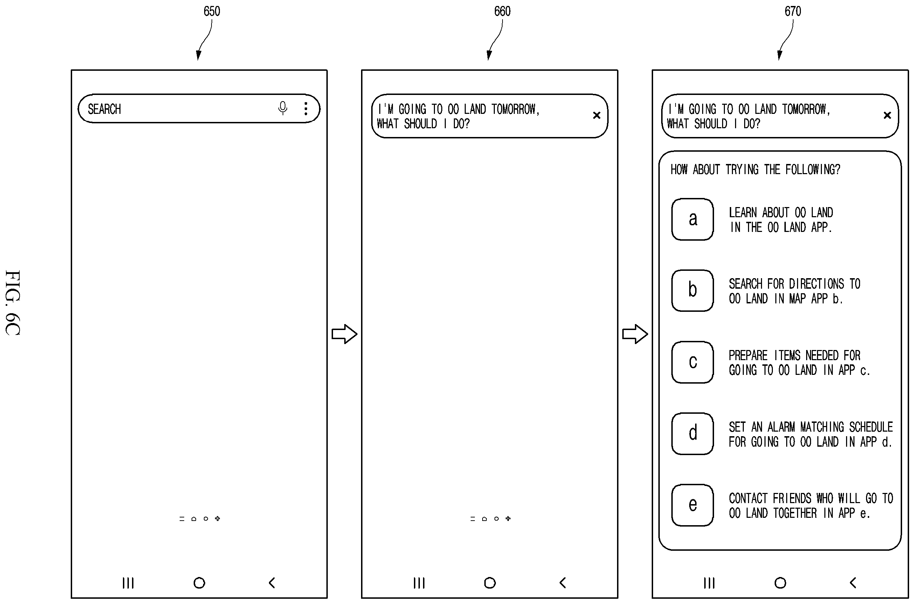

Referring to FIG. 6C, the electronic device 10 may generate a user interface based on user input. In one example, the electronic device 10 may display a search window screen 650, a user input screen 660 for a search window, and/or a user interface display screen 670 in at least a partial region of the display 110. In one example, the search window screen 650, the user input screen 660 for the search window, and the user interface display screen 670 may be sequentially displayed on at least a partial region of the display 110 based on user input. For example, when user input to the user input screen 660 for the search window is completed, the user interface display screen 670 may be displayed on at least a partial region of the display 110.

According to an embodiment, the user input screen 660 for the search window may include a user interface for guiding user input. For example, the user interface for guiding user input may include a search window in which the user input is performed. In one example, user input entered into the search window may include text input of the user, voice input, or file-type input. For example, the home screen 610 on which the user interface for guiding user input is displayed may receive a text input "I am going to OO Land tomorrow, what should I do?" from the user.

According to an embodiment, the user interface display screen 670 may include a screen on which the user interface generated based on user input is displayed on at least a partial region of the display 110. In one example, referring to FIG. 6A together, the user interface display screen 670 of FIG. 6C may include at least one component of the application and/or action set display screen 620 of FIG. 6A. In one example, the application and/or action set display screen 620 of FIG. 6A may include a user interface generated based on the user input to the home screen 610 on which the user interface for guiding user input is displayed. Correspondingly, the user interface display screen 670 of FIG. 6C may include a user interface generated based on the user input entered into the user input screen 660 for the search window.

According to an embodiment, referring to FIG. 6A together, the user interface included in the user interface display screen 670 of FIG. 6C may correspond to the user interface included in the application and/or action set display screen 620 of FIG. 6A. For example, since the user interface included in the user interface display screen 670 of FIG. 6C and the user interface included in the application and/or action set display screen 620 of FIG. 6A receive a common text input "I am going to OO Land tomorrow, what should I do?", identical or similar user interfaces may be displayed. In one example, a generation operation of the user interface included in the user interface display screen 670 of FIG. 6C may correspond to a generation operation of the user interface included in the application and/or action set display screen 620 of FIG. 6A.

According to an embodiment, referring to FIG. 6A together, the user interface included in the user interface display screen 670 of FIG. 6C may include a configuration different from that of the user interface included in the application and/or action set display screen 620 of FIG. 6A. In one example, since the user input of FIG. 6A is a user input to the home screen 610 on which a user interface for guiding user input on the home screen is displayed, whereas the user input of FIG. 6C is a user input to the search window, in FIG. 6A the trigger generation module (e.g., 3300 of FIG. 3A) may generate a trigger "create_homescreen" for "goal." In contrast, in FIG. 6C the trigger generation module (e.g., 3300 of FIG. 3A) may generate a trigger "create_finder_result" for "goal." In one example, the user interface included in the user interface display screen 670 of FIG. 6C may have a configuration in which interfaces are arranged corresponding to the search window by a prompt corresponding to the trigger "create_finder_result."

FIG. 7 is a block diagram illustrating an electronic device 701 in a network environment 700 according to various embodiments.

Referring to FIG. 7, the electronic device 701 in the network environment 700 may communicate with an electronic device 702 via a first network 798 (e.g., a short-range wireless communication network), or at least one of an electronic device 704 or a server 708 via a second network 799 (e.g., a long-range wireless communication network). According to an embodiment, the electronic device 701 may communicate with the electronic device 704 via the server 708. According to an embodiment, the electronic device 701 may include a processor 720, memory 730, an input module 750, a sound output module 755, a display module 760, an audio module 770, a sensor module 776, an interface 777, a connecting terminal 778, a haptic module 779, a camera module 780, a power management module 788, a battery 789, a communication module 790, a subscriber identification module(SIM) 796, or an antenna module 797. In some embodiments, at least one of the components (e.g., the connecting terminal 778) may be omitted from the electronic device 701, or one or more other components may be added in the electronic device 701. In some embodiments, some of the components (e.g., the sensor module 776, the camera module 780, or the antenna module 797) may be implemented as a single component (e.g., the display module 760).

The processor 720 may execute, for example, software (e.g., a program 740) to control at least one other component (e.g., a hardware or software component) of the electronic device 701 coupled with the processor 720, and may perform various data processing or computation. According to one embodiment, as at least part of the data processing or computation, the processor 720 may store a command or data received from another component (e.g., the sensor module 776 or the communication module 790) in volatile memory 732, process the command or the data stored in the volatile memory 732, and store resulting data in non-volatile memory 734. According to an embodiment, the processor 720 may include a main processor 721 (e.g., a central processing unit (CPU) or an application processor (AP)), or an auxiliary processor 723 (e.g., a graphics processing unit (GPU), a neural processing unit (NPU), an image signal processor (ISP), a sensor hub processor, or a communication processor (CP)) that is operable independently from, or in conjunction with, the main processor 721. For example, when the electronic device 701 includes the main processor 721 and the auxiliary processor 723, the auxiliary processor 723 may be adapted to consume less power than the main processor 721, or to be specific to a specified function. The auxiliary processor 723 may be implemented as separate from, or as part of the main processor 721.

The auxiliary processor 723 may control at least some of functions or states related to at least one component (e.g., the display module 760, the sensor module 776, or the communication module 790) among the components of the electronic device 701, instead of the main processor 721 while the main processor 721 is in an inactive (e.g., sleep) state, or together with the main processor 721 while the main processor 721 is in an active state (e.g., executing an application). According to an embodiment, the auxiliary processor 723 (e.g., an image signal processor or a communication processor) may be implemented as part of another component (e.g., the camera module 780 or the communication module 790) functionally related to the auxiliary processor 723. According to an embodiment, the auxiliary processor 723 (e.g., the neural processing unit) may include a hardware structure specified for artificial intelligence model processing. An artificial intelligence model may be generated by machine learning. Such learning may be performed, e.g., by the electronic device 701 where the artificial intelligence is performed or via a separate server (e.g., the server 708). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 730 may store various data used by at least one component (e.g., the processor 720 or the sensor module 776) of the electronic device 701. The various data may include, for example, software (e.g., the program 740) and input data or output data for a command related thereto. The memory 730 may include the volatile memory 732 or the non-volatile memory 734.

The program 740 may be stored in the memory 730 as software, and may include, for example, an operating system (OS) 742, middleware 744, or an application 746.

The input module 750 may receive a command or data to be used by another component (e.g., the processor 720) of the electronic device 701, from the outside (e.g., a user) of the electronic device 701. The input module 750 may include, for example, a microphone, a mouse, a keyboard, a key (e.g., a button), or a digital pen (e.g., a stylus pen).

The sound output module 755 may output sound signals to the outside of the electronic device 701. The sound output module 755 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 760 may visually provide information to the outside (e.g., a user) of the electronic device 701. The display module 760 may include, for example, a display, a hologram device, or a projector and control circuitry to control a corresponding one of the display, hologram device, and projector. According to an embodiment, the display module 760 may include a touch sensor adapted to detect a touch, or a pressure sensor adapted to measure the intensity of force incurred by the touch.

The audio module 770 may convert a sound into an electrical signal and vice versa. According to an embodiment, the audio module 770 may obtain the sound via the input module 750, or output the sound via the sound output module 755 or a headphone of an external electronic device (e.g., an electronic device 702) directly (e.g., wiredly) or wirelessly coupled with the electronic device 701.

The sensor module 776 may detect an operational state (e.g., power or temperature) of the electronic device 701 or an environmental state (e.g., a state of a user) external to the electronic device 701, and then generate an electrical signal or data value corresponding to the detected state. According to an embodiment, the sensor module 776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 777 may support one or more specified protocols to be used for the electronic device 701 to be coupled with the external electronic device (e.g., the electronic device 702) directly (e.g., wiredly) or wirelessly. According to an embodiment, the interface 777 may include, for example, a high definition multimedia interface (HDMI), a universal serial bus (USB) interface, a secure digital (SD) card interface, or an audio interface.

A connecting terminal 778 may include a connector via which the electronic device 701 may be physically connected with the external electronic device (e.g., the electronic device 702). According to an embodiment, the connecting terminal 778 may include, for example, a HDMI connector, a USB connector, a SD card connector, or an audio connector (e.g., a headphone connector).

The haptic module 779 may convert an electrical signal into a mechanical stimulus (e.g., a vibration or a movement) or electrical stimulus which may be recognized by a user via his tactile sensation or kinesthetic sensation. According to an embodiment, the haptic module 779 may include, for example, a motor, a piezoelectric element, or an electric stimulator.

The camera module 780 may capture a still image or moving images. According to an embodiment, the camera module 780 may include one or more lenses, image sensors, image signal processors, or flashes.

The power management module 788 may manage power supplied to the electronic device 701. According to one embodiment, the power management module 788 may be implemented as at least part of, for example, a power management integrated circuit (PMIC).

The battery 789 may supply power to at least one component of the electronic device 701. According to an embodiment, the battery 789 may include, for example, a primary cell which is not rechargeable, a secondary cell which is rechargeable, or a fuel cell.

The communication module 790 may support establishing a direct (e.g., wired) communication channel or a wireless communication channel between the electronic device 701 and the external electronic device (e.g., the electronic device 702, the electronic device 704, or the server 708) and performing communication via the established communication channel. The communication module 790 may include one or more communication processors that are operable independently from the processor 720 (e.g., the application processor (AP)) and supports a direct (e.g., wired) communication or a wireless communication. According to an embodiment, the communication module 790 may include a wireless communication module 792 (e.g., a cellular communication module, a short-range wireless communication module, or a global navigation satellite system (GNSS) communication module) or a wired communication module 794 (e.g., a local area network (LAN) communication module or a power line communication (PLC) module). A corresponding one of these communication modules may communicate with the external electronic device via the first network 798 (e.g., a short-range communication network, such as Bluetooth^{™}, wireless-fidelity (Wi-Fi) direct, or infrared data association (IrDA)) or the second network 799 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 792 may identify and authenticate the electronic device 701 in a communication network, such as the first network 798 or the second network 799, using subscriber information (e.g., international mobile subscriber identity (IMSI)) stored in the subscriber identification module 796.

The wireless communication module 792 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 792 may support a high-frequency band (e.g., the mmWave band) to achieve, e.g., a high data transmission rate. The wireless communication module 792 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 792 may support various requirements specified in the electronic device 701, an external electronic device (e.g., the electronic device 704), or a network system (e.g., the second network 799). According to an embodiment, the wireless communication module 792 may support a peak data rate (e.g., 20Gbps or more) for implementing eMBB, loss coverage (e.g., 764dB or less) for implementing mMTC, or U-plane latency (e.g., 0.5ms or less for each of downlink (DL) and uplink (UL), or a round trip of 7ms or less) for implementing URLLC.

The antenna module 797 may transmit or receive a signal or power to or from the outside (e.g., the external electronic device) of the electronic device 701. According to an embodiment, the antenna module 797 may include an antenna including a radiating element composed of a conductive material or a conductive pattern formed in or on a substrate (e.g., a printed circuit board (PCB)). According to an embodiment, the antenna module 797 may include a plurality of antennas (e.g., array antennas). In such a case, at least one antenna appropriate for a communication scheme used in the communication network, such as the first network 798 or the second network 799, may be selected, for example, by the communication module 790 (e.g., the wireless communication module 792) from the plurality of antennas. The signal or the power may then be transmitted or received between the communication module 790 and the external electronic device via the selected at least one antenna. According to an embodiment, another component (e.g., a radio frequency integrated circuit (RFIC)) other than the radiating element may be additionally formed as part of the antenna module 797.

According to various embodiments, the antenna module 797 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 701 and the external electronic device 704 via the server 708 coupled with the second network 799. Each of the electronic devices 702 or 704 may be a device of a same type as, or a different type, from the electronic device 701. According to an embodiment, all or some of operations to be executed at the electronic device 701 may be executed at one or more of the external electronic devices 702, 704, or 708. For example, if the electronic device 701 should perform a function or a service automatically, or in response to a request from a user or another device, the electronic device 701, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 701. The electronic device 701 may provide the outcome, with or without further processing of the outcome, as at least part of a reply to the request. To that end, a cloud computing, distributed computing, mobile edge computing (MEC), or client-server computing technology may be used, for example. The electronic device 701 may provide ultra low-latency services using, e.g., distributed computing or mobile edge computing. In another embodiment, the external electronic device 704 may include an internet-of-things (IoT) device. The server 708 may be an intelligent server using machine learning and/or a neural network. According to an embodiment, the external electronic device 704 or the server 708 may be included in the second network 799. The electronic device 701 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 740) including one or more instructions that are stored in a storage medium (e.g., internal memory 736 or external memory 738) that is readable by a machine (e.g., the electronic device 701). For example, a processor (e.g., the processor 720) of the machine (e.g., the electronic device 701) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

FIG. 8 illustrates an artificial intelligence system according to an embodiment.

Referring to FIGS. 1 and 8, according to an embodiment, the electronic device 10 may be configured to implement an artificial intelligence system 800. For example, the artificial intelligence system 800 may be implemented by instructions stored in the memory 120 being executed by the processor 100. Components in the artificial intelligence system 800 may be referred to as software modules (e.g., an application, a program, or a thread). A configuration of the artificial intelligence system 800 illustrated in FIG. 8 is merely an example, and embodiments of the present disclosure are not limited thereto. For example, at least some of the components of the artificial intelligence system 800 illustrated in FIG. 8 may be implemented in an external device (e.g., a server or an external terminal device) communicatively connected to the electronic device 10. The electronic device 10 may implement the artificial intelligence system 800 by exchanging data with the external device using the communication circuit 130.

For example, the artificial intelligence system 800 may include a user interface 810, an artificial intelligence framework 820, a database 830, an application/service module 840, and/or a generative AI model 850. As described above, the components of the artificial intelligence system 800 may be implemented by the electronic device 10, or at least some of the components may be implemented by the electronic device 10.

The user interface 810 may be referred to as a software interface between the artificial intelligence framework 820 and the user. For example, the user interface 810 may acquire an input (e.g., user input and/or context information) using hardware components (e.g., an interface, a sensor, and/or a camera) of the electronic device 10. The user interface 810 may transmit the acquired input to the artificial intelligence framework 820. The user interface 810 may be configured to output output information acquired from the artificial intelligence framework 820.

In one example, the user interface 810 may be configured to process a multi-modal input. For example, the user interface 810 may receive at least one of text (e.g., natural language), an image, a sound, or a video as an input. In one example, the input may include an input to the user interface (e.g., a menu selection). For example, the user interface 810 may convert the acquired input into an input format supported by the artificial intelligence framework 820 and transmit the converted input to the artificial intelligence framework 820.

In one example, the user interface 810 may transmit context information to the artificial intelligence framework 820. For example, the context information may be transmitted to the artificial intelligence framework 820 together with the input. For example, the context information may include various items of additional information at a point in time when the input is received (e.g., information on a currently executing application, location information, surrounding environment information acquired using a sensor, and/or information stored in the memory 120).

In one example, the user interface 810 may be configured to output a result of the artificial intelligence framework 820. For example, the user interface 810 may provide the result in a form of natural language, a designated content form, and/or a form of a user-requested action. For example, the user interface 810 may be configured to output the output information using the display 110 and/or the speaker. In one example, the user interface 810 may be configured to output the output information using visual information, auditory information, and/or tactile information.

According to an embodiment, the artificial intelligence framework 820 may be configured to receive an input of the user and coordinate and control respective components or modules required to perform an intent of the user based on the user input (e.g., a user query). For example, the artificial intelligence framework 820 may include a prompt design module 821, an application programming interface (API)/plugin management module 823, and/or a modification module 825.

For example, the input (e.g., user input and/or context information) received from the user interface 810 may be transmitted to the prompt design module 821. The prompt design module 821 may be used to generate a prompt suitable for inputting the input into a large language model (LLM) or a large multi-modal model (LMM). For example, the prompt design module 821 may include an artificial intelligence component using a machine learning algorithm or a neural network. For example, the prompt design module 821 may generate a prompt from the input using the artificial intelligence component.

For example, the LLM may refer to a neural-network-based language model trained on a large amount of text data through pre-training. The LLM may include significantly more parameters (e.g., 10 billion or more) than a conventional general language model. In one example, the LLM may use a transformer neural network structure based on an attention mechanism.

The attention mechanism is a technology that enables an artificial intelligence model to focus on important portions within input data. The attention mechanism may be used for predicting output data by predicting a degree to which some portions of time-series input data (e.g., input data such as speech, video, and the like, or input data of some layers of the neural network) contribute to an intermediate output or a final output of the neural network. A recurrent neural network (RNN) structure that sequentially processes each element of a sequence has degraded prediction performance when there is an information dependency across long time-series distances, whereas the attention mechanism may consider an information dependency across long time-series distances by controlling a degree of weight concentration (e.g., attention) within a context of all or part of the input data.

For example, the transformer may include an encoder-decoder structure. The encoder may process input data and output compressed information (e.g., a contextual representation), and the decoder may process the compressed information and output output data on a token-by-token basis. Each of the encoder and the decoder may include an independent attention network and may include a cross-attention network connecting the encoder and the decoder.

For example, LLM training may include pre-training and/or fine-tuning. The pre-training may be referred to as a process of training the LLM to acquire general language knowledge using a large amount of text data. For example, the pre-training may include self-supervised learning that predicts a next word using preceding word sequences of a text sequence. The fine-tuning may be referred to as a process of training the LLM to be suitable for a specific domain (e.g., a chatbot, translation, summarization, or Q&A) or task. For example, the LLM may be additionally trained by supervised learning (or adaptive learning) using a dataset suitable for a domain purpose based on a pre-trained model. The LLM may perform a task based on a prompt (e.g., a text input including natural language). For example, the fine-tuning may be omitted from LLM training.

In order to improve performance of a task desired by the user, a prompt to be input to the LLM may be selected. Task examples and/or guides for performing the task may be additionally provided as prompts by methods such as in-context learning, zero-shot learning, and/or few-shot learning.

The expression "LLM" may refer to a language neural network model itself, or may refer to a model of an LLM-based application (e.g., a chatbot, translation, summarization, text classification, or sentence generation). For example, an LLM-based chatbot such as ChatGPT or an LLM-based translator may also be referred to as an "LLM." Examples of publicly available LLMs include bidirectional encoder representations from transformer (BERT) and generative pre-trained transformer (GPT).

The "LLM" may include an inference engine using an LLM neural network model. For example, "inputting an input prompt to an LLM" may mean "inputting the input prompt to an inference engine based on the LLM." For example, "an output of the LLM for the input prompt" may mean output information of a last neural network layer of the LLM obtained when the input prompt is input to the inference engine based on the LLM.

The prompt design module 821 may be configured to generate a prompt based on an input and/or the database 830. For example, the database 830 may store user preference data, a prompt library, and/or prompt examples. For example, the prompt design module 821 may generate a prompt using information stored in the database 830. As described below, the prompt design module 821 may use information obtained using the API/plugin management module 823 for prompt generation. The generated prompt may be transmitted to the generative AI model 850 (e.g., a large language model (LLM) or a large multi-modal model (LMM)).

The API/plugin management module 823 may be configured to exchange data with components external to the artificial intelligence framework 820. For example, the API/plugin management module 823 may generate a channel for communication with an element outside the artificial intelligence framework 820 (e.g., an operating system and/or an application) through an API. The API/plugin management module 823 may access various data sources through the generated channel and obtain data. The data obtained by the API/plugin management module 823 may be used for prompt generation by the prompt design module 821. The data obtained by the API/plugin management module 823 may be used as an input to the generative AI model 850. In one example, when data (e.g., user input) is required in a process of generating a result of the artificial intelligence framework 820, the API/plugin management module 823 may obtain the data using an application and/or a service of the application/service module 840.

In one example, the application/service module 840 may include at least one application and/or at least one service. For example, the at least one service may include a service of an operating system. The application and/or the service of the application/service module 840 may communicate with the API/plugin management module 823 through the API or a plugin. The API/plugin management module 823 may transmit data instructing a designated operation to the application/service module 840 through the API or the plugin.

According to an embodiment, the modification module 825 may finely tune a result output from the generative AI model 850. For example, the modification module 825 may perform filtering on content generated through the generative AI model 850. The modification module 825 may be configured to remove or filter biased content, harmful content, content having low relevance to the prompt, and/or hateful content from an output result. In one example, the modification module 825 may identify an association (e.g., a correlation) between the output result of the generative AI model 850 and the intent of the user (e.g., the intent identified from the user input and/or the context information). When the association between the output result and the intent of the user is low, the modification module 825 may perform an additional operation. For example, the modification module 825 may obtain an additional input of the user to obtain a result having a higher association. In order to prevent repetition of an additional procedure, the modification module 825 may generate a hint and provide the generated hint to the user.

According to an embodiment, the generative AI model 850 may be referred to as an artificial intelligence neural network that generates data in a new form (e.g., data including information not included in input information) from user input information. The generative AI model 850 may include a model generating an image and/or a model generating a language. The model generating an image may include, for example, a generative adversarial network (GAN), a variational autoencoder (VAE), and/or a diffusion-based generative model using a VAE and a transformer structure. The model generating a language may include a model trained to output a statistically most appropriate output value based on an input value. For example, the model generating a language may include a model such as ChatGPT 3 or ChatGPT 4. The generative AI model 850 may include a large language model (LLM) or a large multi-modal model (LMM).

## Claims

1. An electronic device comprising:
a display;
at least one processor electrically connected to the display; and
memory electrically connected to the at least one processor and storing instructions,
wherein the instructions, when executed by the at least one processor, cause the electronic device to:
identify at least one of user personal information stored in the memory or a user input to the electronic device,
generate, based on at least one of the user personal information or the user input, at least one prompt,
generate a first user interface to guide a recommended operation by inputting the at least one prompt into an artificial intelligence model, and
display, through the display, the first user interface.

2. The electronic device of claim 1, wherein the user personal information comprises at least one of schedule information of a user, date information, time information, place information, photo information, memo information, or data received from an application installed in the electronic device.

3. The electronic device of claim 1 or 2, wherein the user input comprises at least one of schedule information of a user, date information, time information, place information, product information, attendee information, or interface information to which the user input is input.

4. The electronic device of any one of claims 1 to 3, wherein the instructions, when executed by the at least one processor, cause the electronic device to generate an additional user interface for generating an additional prompt.

5. The electronic device of claim 4, wherein the instructions, when executed by the at least one processor, cause the electronic device to:
identify, based on the additional user interface, at least one of additional user personal information stored in the memory or an additional user input, and
generate, based on the at least one of the additional user personal information or the additional user input, at least one additional prompt.

6. The electronic device of claim 5, wherein the instructions, when executed by the at least one processor, cause the electronic device to:
generate a second user interface to guide a recommended operation by inputting the additional prompt into the artificial intelligence model, and
display, through the display, the second user interface.

7. The electronic device of any one of claims 1 to 6, wherein the at least one prompt causes the artificial intelligence model to collect at least one of an application, an action, a widget, or resolution information associated with at least one of the user personal information or the user input.

8. The electronic device of claim 7, wherein the at least one prompt causes the artificial intelligence model to generate the first user interface based on the collected at least one of the application, the action, the widget, or the resolution information.

9. The electronic device of any one of claims 1 to 8, wherein the artificial intelligence model comprises at least one of a generative advertising neural network (GAN), a variational autoencoder (VAE), or a style GAN.

10. The electronic device of any one of claims 1 to 9, wherein the artificial intelligence model is stored in the memory or an external server device.

11. A method of an electronic device, the method comprising:
identifying at least one of user personal information stored in a memory of the electronic device or user input to the electronic device;
generating at least one prompt based on the at least one of the user personal information or the user input;
generating a first user interface to guide a recommended operation by inputting the at least one prompt to an artificial intelligence model; and
providing the generated first user interface through a display of the electronic device.

12. The method of claim 11, wherein the user personal information comprises at least one of schedule information of a user stored in the memory, date information, time information, photo information, memo information, or data received from an application installed on the electronic device.

13. The method of claim 11 or 12, wherein the user input comprises at least one of schedule information of a user, date information, time information, place information, product information, attendee information, or interface information into which the user input is input.

14. The method of any one of claims 11 to 13, further comprising generating an additional user interface for generating an additional prompt.

15. The method of claim 14, further comprising:
identifying, based on the additional user interface, at least one of additional user personal information stored in the memory or an additional user input; and
generating, based on the at least one of the additional user personal information or the additional user input, at least one additional prompt.
